# FASCICULE DE BREVET EUROPEEN

(11) **EP 3 089 898 B1**
(45) Date de publication et mention de la délivrance du brevet: **14.02.2018**
(21) Numéro de dépôt: 14828018.3
(22) Date de dépôt: 16.12.2014
(51) Int. Cl.: B60T 13/02, B60T 13/12, B60T 13/58, B60T 13/74, F16D 51/22, F16D 51/24, F16D 51/50, F16D 51/62, F16D 51/66, F16D 65/09, F16D 65/46, F16D 51/68

(54) **DISPOSITIF DE FREIN A TAMBOUR INCLUANT UN FREIN DE STATIONNEMENT FONCTIONNANT EN MODE DUO SERVO, VEHICULE ET PROCEDES D'ASSEMBLAGE ASSOCIES**
TROMMELBREMSE MIT FESTSTELLBREMSE IN DOPPELSERVOMODOS BETRIEBEN, FAHRZEUG MIT SO EINER BREMSE, UND -HERSTELLUNGSVERFAHREN
DRUM BRAKE DEVICE INCLUDING A PARKING BRAKE OPERATING IN DUO SERVO MODE, ASSOCIATED VEHICLE AND ASSEMBLY METHODS

(30) Priorité: 30.12.2013 FR 1363706
(43) Date de publication de la demande: 09.11.2016
(73) Titulaire: Chassis Brakes International B.V., 5656 AG Eindhoven (NL)
(72) Inventeur: GUIGNON, Cédric, 94510 La Queue en Brie (FR); LUU, Gérard, 93160 Noisy Le Grand (FR); DUPAS, Christophe, 91120 Palaiseau (FR); PASQUET, Thierry, 94700 Vincennes (FR); MOLINARO, Alberto, 93160 Noisy Le Grand (FR)
(74) Mandataire: Pontet Allano & Associes
(86) Numéro de dépôt international: PCT/EP2014/078027
(87) Numéro de publication internationale: WO 2015/101486

(56) Documents cités:
- EP-A1- 0 061 961
- DE-A1-102005 048 339
- FR-A1- 2 697 599

## Description

L'invention se rapporte à un frein à tambour de véhicule routier, en particulier pour un véhicule automobile de type léger ou lourd.

Ce frein à tambour fournit la fonction de frein de service ainsi que de frein de stationnement ou de secours, en fonctionnant selon deux modes différents.

En mode frein de service, un premier actionneur écarte deux extrémités mobiles des segments tandis que leurs extrémités opposées viennent toutes deux en butée sur un élément d'ancrage, réalisant un fonctionnement de type "simplex".

En mode frein de stationnement, un deuxième actionneur fixé au plateau écarte les deux extrémités de butée l'une de l'autre, tandis que les extrémités mobiles s'appuient l'une sur l'autre par l'intermédiaire d'un élément intercalaire flottant, qui est par exemple une biellette assurant le rattrapage d'usure. Tout couple de freinage ou de maintien transmis par le tambour aux segments est transmis par l'extrémité de butée d'un seul segment, qui vient en appui contre le boîtier du deuxième actionneur. Le deuxième actionneur réalise ainsi un fonctionnement de type "duo servo", fournissant un bien meilleur effort d'appui sans gêner le fonctionnement fiable et éprouvé du frein de service en mode "simplex".

Le deuxième actionneur utilise deux pistons dont un élastique, écartés par un système vis-écrou entraîné par engrenages à axes tous parallèles au déplacement des pistons. Cet engrenage forme un sous-ensemble pré-assemblé qui est inséré entre deux demi-boîtiers, avant de recevoir le système vis-écrou d'un côté du plateau, et de l'autre côté l'arbre de sortie d'un motoréducteur électrique à double train épicycloïdal utilisant une couronne commune.

L'invention a aussi pour objet un véhicule ou un sous-ensemble de véhicule intégrant un tel frein à tambour, et un procédé d'assemblage d'un tel frein à tambour, et un procédé d'assemblage d'un véhicule équipé d'un tel frein.

### Etat de la technique

Dans un véhicule automobile, la fonction de frein de service consiste principalement à ralentir le véhicule et obtenir son arrêt. Dans la plupart des automobiles actuelles, le frein de service est assuré par des freins à tambour ou des freins à disque, ou à disques à l'avant du véhicule et à tambours à l'arrière.

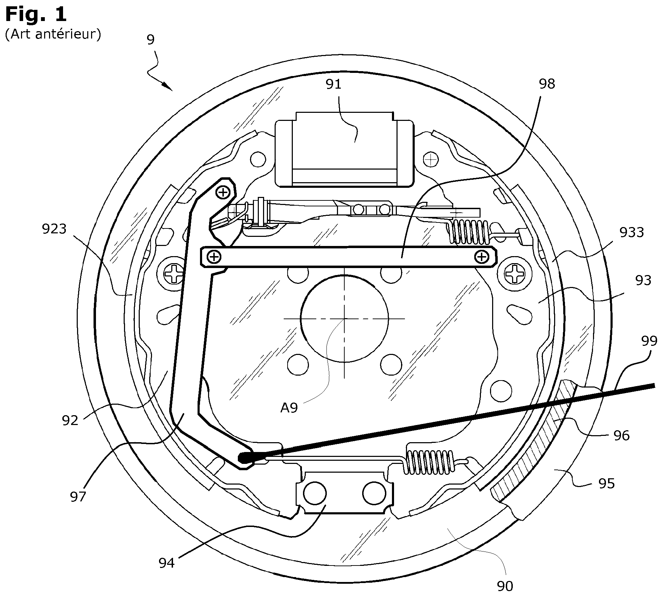

La FIGURE 1 illustre un exemple typique de frein à tambour, qui comprend un tambour 95 coaxial avec la roue, monté solidaire de la roue, et dont une jupe porte une piste intérieure de frottement 96. Cette jupe coiffe un mécanisme monté sur un plateau 90 coaxial avec l'axe A9 du moyeu de la roue. Le plateau est solidaire du demi-train portant le moyeu.

Ce mécanisme comprend deux segments 92, 93 en arcs de cercle montés face à face autour de l'axe de rotation A9 du tambour. Sur leur surface extérieure, des garnitures de frottement 923, 933 viennent appuyer sur la piste du tambour lorsqu'ils sont écartés vers l'extérieur.

Dans les modes appelés "simplex" et "duplex", chaque segment est écarté à une extrémité par un actionneur 91, et son autre extrémité opposée s'appuie tangentiellement à la rotation sur une plaque de butée 94 solidaire du plateau 90, en général par rivetage. Lorsque les segments sont mis en pression contre la piste du tambour, tout mouvement ou effort en rotation de la roue imprime un couple de rotation aux segments, qu'ils transmettent au plateau au moins en partie par cette plaque de butée. En configuration "simplex", les deux segments sont actionnés en leurs deux extrémités d'un même côté, typiquement par un même actionneur hydraulique 91 à double piston et qui est fixé au plateau. C'est le mode le plus classique, qui est simple et d'un fonctionnement fiable et régulier.

La fonction de frein de stationnement consiste à maintenir un véhicule immobilisé de façon continue pendant de longues durées. Depuis longtemps, comme illustré en FIGURE 1, il est connu d'assurer cette fonction au sein du même frein à tambour que pour le frein de service, à l'aide d'un levier 97 tiré par un câble 99 lui-même maintenu sous traction par un mécanisme à cliquet. Le levier 97 pivote sur l'extrémité mobile d'un segment 92, et l'écarte de l'autre segment par une biellette de réaction 98.

La fonction de frein de secours consiste à ralentir un véhicule en mouvement de façon exceptionnelle, par exemple en cas de défaillance du circuit de commande du frein de service. Très souvent, ce fonctionnement est réalisé par le même mécanisme que le frein de stationnement.

Bien que satisfaisant et économique comme frein de service, ce type de frein à tambour peut présenter un couple de freinage insuffisant, en particulier en tant que frein de stationnement.

On connaît aussi un autre mode de fonctionnement pour un frein à tambour, dit "duo servo", dans lequel l'actionneur écarte une extrémité d'un premier segment. Celui-ci s'appuie sur le tambour pendant que son autre extrémité est flottante et prend appui par une biellette flottante sur le deuxième segment par son extrémité en vis-à-vis, flottante elle aussi. L'autre extrémité du deuxième segment est ainsi la seule à prendre appui sur une plaque de butée. Ce mode est nettement plus efficace mais présente d'autres inconvénients, par exemple il est plus délicat à ajuster et s'use de façon irrégulière. Il est peu utilisé comme frein de service.

Un frein à tambour de type duo servo est parfois utilisé comme frein de stationnement exclusivement, par exemple en utilisant comme tambour l'intérieur de la cloche centrale d'un disque qui sert de frein de service, combinaison appelée "Drum In Hat" et décrite dans le document EP 0 416 760.

Depuis quelques temps déjà, il a aussi été proposé de réaliser un frein à tambour qui fonctionnerait comme frein de service en mode simplex et comme frein de stationnement en mode duo servo. Parmi différentes combinaisons, le document FR 2 697 599 propose d'ajouter un actionneur mécanique à proximité de la plaque de butée. Cet actionneur s'appuie d'un côté sur une extrémité d'un premier segment et de l'autre sur l'extrémité d'un levier supplémentaire pour les écarter l'une de l'autre. Ce levier coulisse librement le long de l'autre segment, et son extrémité opposée appuie sur une biellette elle-même en appui sur l'extrémité mobile du premier segment.

L'invention cherche à proposer un dispositif de frein à tambour avec une efficacité améliorée en frein de stationnement ou en frein de secours par rapport à l'effort d'actionnement appliqué et maintenu, une meilleure gestion des variations géométriques dues aux changements de température, en combinaison avec un fonctionnement fiable et silencieux.

Elle vise aussi à utiliser un nombre de pièces limité et des pièces simples, avec une facilité et une économie de fabrication, d'assemblage et de maintenance, tout en conservant tout ou partie des avantages du mode simplex ou duplex.

Elle cherche aussi à proposer un tel dispositif qui soit compatible avec les évolutions techniques des modes de commande des organes automobiles, par exemple par commande électrique.

Elle cherche en outre à permettre une variété et une facilité d'adaptation de ce dispositif dans un véhicule existant ou en cours de conception, et une souplesse d'intégration dans un processus de montage existent ou en cours de conception.

### Exposé de l'invention

L'invention propose un dispositif de frein à tambour pour véhicule routier, du type provoquant un couple de freinage ou de maintien entre un tambour et un plateau en mouvement de rotation l'un par rapport à l'autre, sous l'effet d'un frottement solide entre :
- d'une part, une piste de frottement formant un cylindre de révolution et qui est portée par une surface intérieure dudit tambour,
- et d'autre part des garnitures de frottement portées par un premier et un deuxième segments disposés à l'intérieur dudit cylindre.

Dans une position de repos, les deux segments sont suffisamment éloignés du tambour vers l'intérieur, c'est à dire vers l'axe de rotation, pour ne pas toucher la piste de frottement.

Ce dispositif peut être actionné dans un premier mode de fonctionnement, typiquement en tant que frein de service c'est à dire dans lequel le couple de freinage est le plus souvent obtenu par absorption d'énergie sous l'effet d'un frottement provoqué au cours de la rotation.

Dans le premier mode de fonctionnement, le frottement est obtenu par écartement d'au moins l'un desdits segments vers l'extérieur, et typiquement les deux, sous l'effet d'au moins un premier actionneur, par exemple mais non obligatoirement fixé audit plateau. Une partie au moins du couple de freinage est alors transmis audit plateau par au moins un élément d'ancrage formant une butée pour l'un au moins desdits segments par rapport au plateau, et le mécanisme est alors dans une première position de freinage. Les modes de fonctionnement de ce type comprennent en particulier les configurations dites "simplex" et "duplex".

Le dispositif selon l'invention comprend un élément dit intercalaire, qui est mobile par rapport au plateau et qui est agencé pour maintenir écartées l'une de l'autre deux extrémités desdits segments qui sont en vis à vis l'une de l'autre, dites extrémités mobiles.

Selon l'invention, le dispositif comprend en outre au moins un deuxième actionneur agencé pour pouvoir écarter l'une de l'autre les extrémités desdits segments situées du côté opposé, dites extrémités de butée, et mettre ainsi lesdits segments en appui contre la piste de frottement du tambour. Un couple de freinage ou de maintien entre ledit tambour et un premier segment est alors créé par ce frottement. Ce premier segment prend appui par son extrémité mobile sur ledit élément intercalaire, lequel prend appui sur l'extrémité mobile du deuxième segment, lequel transmet au plateau ledit couple de freinage ou de maintien par son extrémité de butée. Par cette activation du deuxième actionneur, le mécanisme peut ainsi passer d'une position de repos, ou de la première position de freinage, à une deuxième position de freinage. Dans cette deuxième position de freinage, les deux segments se comportent en segments "comprimés", et le couple de freinage ou de maintien est transmis au plateau par l'extrémité de butée d'un seul segment. Ce deuxième mode de fonctionnement correspond ainsi à une configuration de type dit "duo servo".

Le frein selon l'invention peut alors être qualifié de frein à tambour "bi-mode", avec un premier mode de type simplex ou duplex pouvant être utilisé comme frein de service, et un deuxième mode de type duo servo pouvant être utilisé comme frein de stationnement et de secours.

De façon actuellement préférée, le frein à tambour est agencé avec un même premier actionneur qui actionne les deux segments, en écartant l'une de l'autre leurs extrémités mobiles.

Un tel frein bi-mode présente ainsi un premier mode qui est plus spécifiquement qualifié de "simplex", typiquement en tant que frein de service.

Selon une particularité de l'invention, le deuxième actionneur est monté solidaire du plateau, par au moins un boîtier dans lequel il est logé. Lors d'un actionnement dudit dispositif dans le premier mode de fonctionnement, les extrémités de butée des deux segments prennent directement ou indirectement appui sur ce boîtier.

De préférence, le deuxième actionneur est entraîné par un élément de motorisation comprenant au moins un moteur électrique.

Selon une particularité de l'invention, le premier actionneur comprend un actionneur d'un type fonctionnant par déplacement d'un ou plusieurs pistons sous l'effet d'une pression hydraulique, typiquement un cylindre de roue fixé au plateau et avec deux pistons coaxiaux s'écartant dans des sens opposés. Le deuxième actionneur est alors combiné avec un mécanisme analogue à un frein à tambour classique à cylindre de roue à double piston. Une telle combinaison est intéressante dans des véhicules actuels ou dans un futur proche, en particulier sur des segments de marchés de véhicules compacts ou moyens ou d'entrée de gamme.

Selon une autre particularité, le premier actionneur comprend un actionneur d'un type fonctionnant par déplacement d'un ou plusieurs pistons sous l'effet d'une motorisation électrique, typiquement un écarteur électrique, en particulier un écarteur électrique analogue au deuxième actionneur. On obtient ainsi un frein totalement électrique, avec un frein de stationnement de bonnes performance, qui est intéressant pour les prochaines générations de véhicules à commandes électriques en majorité ou en totalité.

Selon certaines particularité, une ou plusieurs des motorisations électriques ainsi prévues comprend un sous ensemble électronique agencé pour recevoir un signal de commande électronique reçu par une connexion électronique de commande et interpréter ledit signal de commande pour alimenter le moteur électrique, par exemple à travers un ou plusieurs étages de puissance, à l'aide d'une énergie électrique reçue par une connexion électrique différente de la connexion de commande.

Par exemple, le mécanisme de frein peut ainsi être directement raccordé à et commandé par le calculateur central du véhicule, par exemple par l'intermédiaire d'un bus interne de communication de type CAN. Selon un autre exemple, le mécanisme de frein est directement raccordé à et commandé par le calculateur d'un système de surveillance et de contrôle de trajectoire, souvent appelé "ESP", ou de freinage, souvent appelé "ABS".

Dans une autre variante, la motorisation comprend peu ou pas d'étage de puissance. Il est alors possible de gagner en poids non suspendu et en compacité, par exemple en utilisant une commande en puissance électrique délivrée directement par les étages de puissance d'un tel système de surveillance et de contrôle.

Selon une autre particularité envisagée, le deuxième actionneur est contrôlé par une commande mécanique : soit entièrement par énergie mécanique, soit par une commande mécanique qui contrôle une motorisation électrique d'actionneur, comme un câble de frein à main.

De préférence, le deuxième actionneur écarte les extrémités de butée des deux segments au moyen d'un mécanisme comprenant au moins une interface de transmission mécanique de mouvement d'un type présentant une irréversibilité du sens de transmission dudit mouvement.

En particulier, cet ensemble d'actionnement linéaire comprend au moins un premier élément fileté et un deuxième élément fileté interagissant entre eux pour former un système vis-écrou produisant le mouvement linéaire sous l'effet d'une rotation dudit premier élément par rapport audit deuxième élément. Ce système vis-écrou inclut de préférence une telle irréversibilité de transmission d'effort, mais il est aussi envisagé sans elle.

Pour réaliser une démultiplication importante, ce qui est souvent nécessaire dans le cas des motorisations électriques, une solution très utilisée est l'engrenage d'une vis sans fin entraînant une roue dentée qui lui est transversale, à 90° ou légèrement oblique par exemple jusqu'à 60°. Cette solution permet en outre un faible encombrement et utilise peu de pièces.

De façon différente, l'invention propose de transmettre la rotation d'une motorisation à l'ensemble d'actionnement par des engrenages mécaniques à axes parallèles entre eux et à la direction dudit mouvement linéaire. En variante ces axes peuvent présenter de légers angles entre eux, par exemple en formant au total un angle de moins de 30°, ou même moins de 15°.

Ce type de transmission permet d'obtenir un bon rendement dans les efforts transmis, et ainsi de limiter les besoins de puissance ou d'augmenter les performances pour une puissance donnée.

Selon un autre aspect, l'invention propose un véhicule ou un sous-ensemble de véhicule, typiquement véhicule routier automobile, comprenant un ou plusieurs dispositif de frein à tambour bi-mode comme exposé ici.

Le premier actionneur du frein à tambour bi-mode est connecté et commandé pour réaliser une fonction de ralentissement et/ou arrêt dudit véhicule lorsqu'il est en mouvement, dite fonction de frein de service, de façon analogue à un frein à tambour classiquement monté sur les automobiles. Le deuxième actionneur, de son côté, est connecté et commandé pour réaliser la fonction de maintien à l'arrêt dudit véhicule sans intervention, dite fonction de frein de stationnement, et/ou de ralentissement dudit véhicule en mouvement en cas de défaillance d'une fonction de type frein de service, dite fonction de frein de secours. Typiquement, il combine les fonctions de frein de stationnement et de frein de secours.

Selon une particularité d'un tel véhicule ou sous ensemble de véhicule, le deuxième actionneur est activé par une motorisation électrique commandée par un système de calculateur électronique centralisé gérant les fonctions électroniques dudit véhicule, ou une motorisation électrique commandée et alimentée en puissance par un système électronique de surveillance et de correction de freinage (i.e. ABS) et/ou de trajectoire (ie. ESP) dudit véhicule.

Selon encore un autre aspect, l'invention propose un procédé d'assemblage d'un véhicule ou sous-ensemble de véhicule comprenant un assemblage et/ou un montage d'un dispositif de frein à tambour tel qu'exposé ici.

En particulier, l'invention propose un procédé d'assemblage d'un mécanisme de frein à tambour comprenant un premier et un deuxième segment munis de garnitures dirigées vers l'extérieur, qui sont coiffés par ledit tambour et sont montés sur un plateau de façon à pouvoir transmettre audit plateau un couple de freinage par absorption d'énergie sous l'effet d'un frottement avec une piste cylindrique portée par l'intérieur dudit tambour si lesdits segments sont écartés vers l'extérieur. Selon l'invention, ce procédé comprend au moins les opérations suivantes, dans cet ordre ou dans un autre ordre :
- fixation sur le plateau d'au moins un premier actionneur agencé pour pouvoir écarter vers l'extérieur les segments par appui sur leurs deux extrémités en vis-à-vis l'une de l'autre, dites extrémités mobiles ;
- montage des segments sur le plateau, dans une position où leurs extrémités opposées, dites extrémités de butée, peuvent venir en butée contre un élément d'ancrage solidaire dudit plateau si lesdits segments sont écartés par ledit premier actionneur ;
- installation d'un élément intercalaire en position pour maintenir un écartement entre les deux extrémités mobiles des segments ; et
- fixation sur le plateau d'un deuxième actionneur agencé pour pouvoir écarter les deux extrémités de butée des segments de façon à les mettre en appui contre la piste de frottement.

Ainsi, l'invention propose un frein à tambour qui comprend un frein de stationnement ou de secours intégré, présentant de meilleures performances par rapport à ses dimensions et à l'énergie utilisée pour sa commande, tout en conservant les avantages des modes duplex et en particulier simplex, qui sont aujourd'hui économiques et très au point.

Le frein selon l'invention est particulièrement bien adapté à des énergies d'activation utilisées pour automatiser le fonctionnement des commandes, en particulier la commande de frein de stationnement ou de secours, telles que les commandes électriques.

Son fonctionnement en frein de stationnement fournit une irréversibilité intégrée, et une architecture simple, robuste et économique à fabriquer. Il offre un bon rendement énergétique, malgré sa caractéristique d'irréversibilité, et des caractéristiques de compacité et de dissipation thermique intéressantes.

En particulier, l'invention permet un bon rendement énergétique de la transmission depuis la motorisation jusqu'à l'ensemble d'actionnement, ce qui permet d'obtenir un effort de serrage plus important ou une vitesse de serrage plus élevée ou d'utiliser une motorisation moins puissante, ou un meilleur compromis entre ces performances.

L'invention permet une facilité et une souplesse d'adaptation aux besoins et contraintes d'un concepteur de véhicule ou de sous-ensemble de véhicule, par exemple pour l'adaptation à des modèles de véhicule existants, ou pour l'intégration dans des modèles de véhicules en cours de conception.

Elle permet de mettre en oeuvre plusieurs niveaux de performances de motorisation avec un même modèle d'actionneur.

L'invention permet ainsi d'intégrer un tel frein dans la conception d'un véhicule ou un processus de fabrication de véhicule d'une façon souple, polyvalente et économique, au stade de la conception mais aussi au stade de la fabrication, pour un modèle de véhicule ou un processus déjà existant.

Des modes de réalisation variés de l'invention sont prévus, intégrant selon l'ensemble de leurs combinaisons possibles les différentes caractéristiques optionnelles exposées ici.

### Liste des figures

D'autres particularités et avantages de l'invention ressortiront de la description détaillée d'un mode de mise en oeuvre nullement limitatif, et des dessins annexés sur lesquels :
- la FIGURE 1 est une vue de face, selon l'axe de rotation, illustrant un exemple d'art antérieur d'un mécanisme de frein à tambour de type simplex avec une fonction de frein de stationnement obtenue par un levier actionné par câble ;
- la FIGURE 2 est une vue en perspective d'un mécanisme de frein à tambour "bi-mode" dans un exemple de mode de réalisation de l'invention ;
- les FIGURE 3, FIGURE 4 et FIGURE 5 sont des schémas représentant, en vue de face, le fonctionnement du mécanisme de la FIGURE 2 dans différentes positions du mode de fonctionnement en frein de stationnement :
   o FIGURE 3 : lors du serrage, véhicule immobile,
   o FIGURE 4 : une fois serré, avec couple de maintien dans un sens de rotation, et
   o FIGURE 5 : une fois serré, avec couple de maintien dans le sens opposé ;
- la FIGURE 6 est une vue en perspective et écorché partiel de l'actionneur de frein de stationnement du mécanisme de la FIGURE 2, dans un exemple de mode de réalisation à motorisation électrique ;
- les FIGURE 7 et FIGURE 8 sont des vues en éclaté de l'actionneur de frein de stationnement de la FIGURE 6 ;
- la FIGURE 9 est une vue en perspective transparente de la transmission mécanique de l'actionneur de frein de stationnement de la FIGURE 6 ;
- la FIGURE 10 est une vue en éclaté de l'ensemble motoréducteur réalisant la motorisation électrique de l'actionneur de frein de stationnement de la FIGURE 6 ;
- les FIGURE 11, FIGURE 12 et FIGURE 13 sont des vues en perspective représentant l'actionneur de frein de stationnement de la FIGURE 6, son ensemble motoréducteur et le plateau support qui les reçoit dans le mode de réalisation de la FIGURE 2 :
   o FIGURE 11 : avant montage,
   o FIGURE 12 : après montage, en vue partiellement transparente et avec coupe partielle,
   o FIGURE 13 : après montage, vue de dos et illustrant l'encombrement par rapport à l'implantation du frein au sein du demi-train roulant ;
- la FIGURE 14 est une vue en perspective illustrant différentes possibilités de montage d'un frein à tambour sur un même plateau support, d'un type bi-mode selon le mode de réalisation de l'invention de la FIGURE 6 ou avec une plaque de butée réalisant un frein à tambour selon l'art antérieur de la FIGURE 1 ;
- la FIGURE 15 est une vue en perspective illustrant le montage, sur un plateau support pouvant recevoir un frein à tambour bi-mode selon le mode de réalisation de l'invention de la FIGURE 6, d'une plaque de butée réalisant un frein à tambour selon l'art antérieur de la FIGURE 1.

### Description d'un exemple de mode de réalisation

### Mécanisme du frein bi-mode

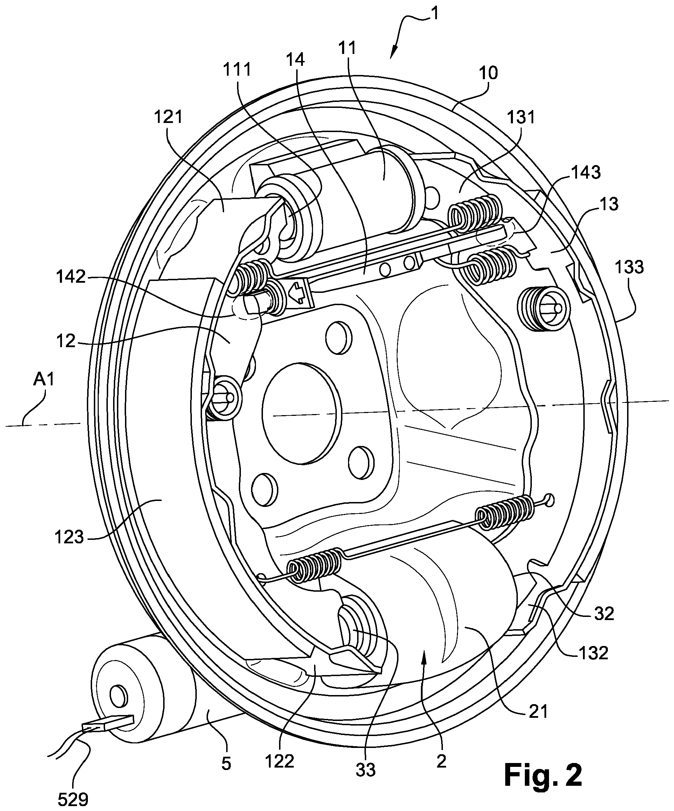

La FIGURE 2 représente un mécanisme de frein à tambour "bi-mode" dans un exemple de mode de réalisation de l'invention. Ce mode de réalisation peut être mis en oeuvre avec différents types d'actionneurs pour le mode de frein de service, et différents type de motorisation pour l'actionneur de frein de stationnement ou de secours.

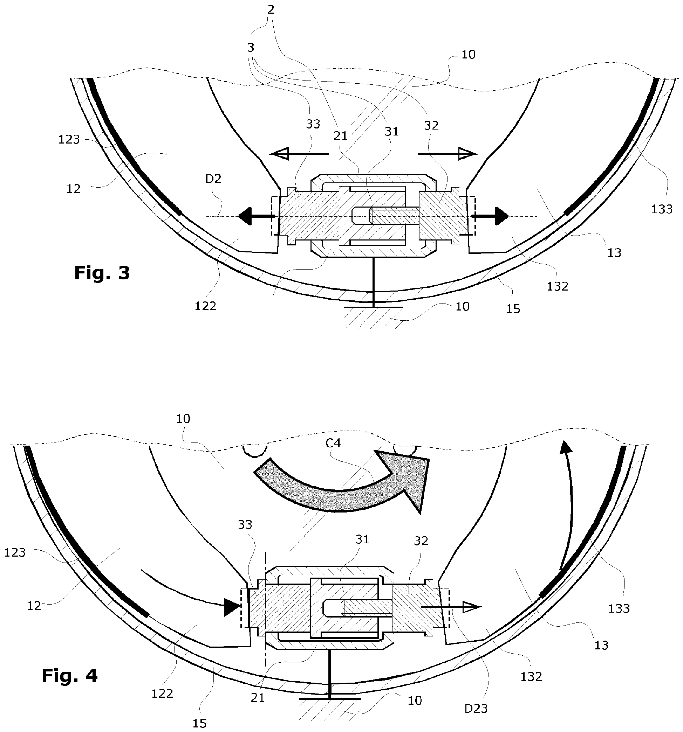

Les FIGURE 3, FIGURE 4 et FIGURE 5 représentent ce mécanisme dans différentes positions de son fonctionnement en frein de stationnement ou de secours.

### Mode frein de service

Ce frein à tambour 1 provoque un couple de freinage entre le tambour (non représenté ici) et le plateau 10 en mouvement de rotation l'un par rapport à l'autre autour d'un axe de rotation A1. Dans une architecture classique de véhicule routier, le plateau 10 est fixé en rotation sur le châssis du véhicule, en général par l'intermédiaire d'un train ou d'un demi-train roulant suspendu. Le tambour est solidaire de la roue, et est fixé en translation et guidé en rotation autour de l'axe A1 par le moyeu et ses roulements, non représentés ici.

En mode frein de service, le couple de freinage est créé par absorption d'énergie sous l'effet d'un frottement entre :
- d'une part, la piste de frottement portée par une surface intérieure dudit tambour, de façon similaire au tambour de la FIGURE 1,
- et d'autre part des garnitures de frottement 123, 133 portées respectivement par un premier et un deuxième segments 12, 13.

Ce frottement est susceptible d'être obtenu par écartement des segments vers l'extérieur sous l'effet d'un premier actionneur 11, ici un vérin hydraulique qui peut être fixé au plateau 10. Depuis la position de repos ou depuis la position de freinage de stationnement, ce premier actionneur 11 amène ainsi le mécanisme en position de freinage de service, et le retour à la position de repos est réalisé par exemple par des ressorts de rappel reliant entre eux les deux segments, comme illustré en FIGURE 2.

Dans cet exemple, le frein à tambour est agencé pour fonctionner en mode simplex lorsqu'il est actionné en tant que frein de service : le premier actionneur 11 est un "cylindre de roue" à deux pistons 111, 112 opposés, qui actionnent chacun l'un des segments 12, 13 en écartant l'une de l'autre leurs deux extrémités en vis-à-vis 121, 131, c'est-à-dire celles situées d'un même côté de l'axe de rotation A1, ici appelées "extrémités mobiles" et situées en haut de la figure. A son extrémité opposée 122, 132, dite extrémité de butée, chaque segment s'appuie au plateau 10 par l'intermédiaire d'un élément d'ancrage solidaire du plateau, et formant ainsi une butée pour ce segment. Cet élément d'ancrage est en même temps un élément de transmission de couple entre segment et plateau. Dans cet exemple, l'élément d'ancrage des deux segments est réalisé par un boîtier 21 du deuxième actionneur 2, ici appelé écarteur, par lequel celui-ci est solidaire du plateau 10. Cette fixation solidaire du boîtier 21 sur le plateau 10 est illustrée symboliquement en FIGURE 3 à FIGURE 5 par le symbole de la terre, en bas et au milieu des figures.

### Mode frein de stationnement ou de secours

Comme illustré en FIGURE 3, l'écarteur 2 comprend un ensemble d'actionnement 3 qui, en mode frein de stationnement ou de secours, appuie sur les extrémités de butée 122, 132 des segments 12, 13 pour les écarter l'une de l'autre, et mettre ainsi les segments en appui contre la piste de frottement du tambour 15.

Depuis la position de repos, ou depuis la position de freinage de service, ce deuxième actionneur 2 amène ainsi le mécanisme en position de freinage de stationnement, et le retour à la position de repos est réalisé par exemple par les mêmes ressorts de rappel.

Dans le présent exemple, l'ensemble d'actionnement linéaire 3 inclut un premier piston 33 et un deuxième piston 32 qui sont déplacés l'un par rapport à l'autre en un mouvement linéaire, selon une direction D2 tangentielle autour de l'axe de rotation A1. Comme indiqué par les deux flèches de la FIGURE 3, ce déplacement appuie les deux pistons respectivement sur les deux extrémités de butée 122, 132 du premier segment 12 et du deuxième segment 13.

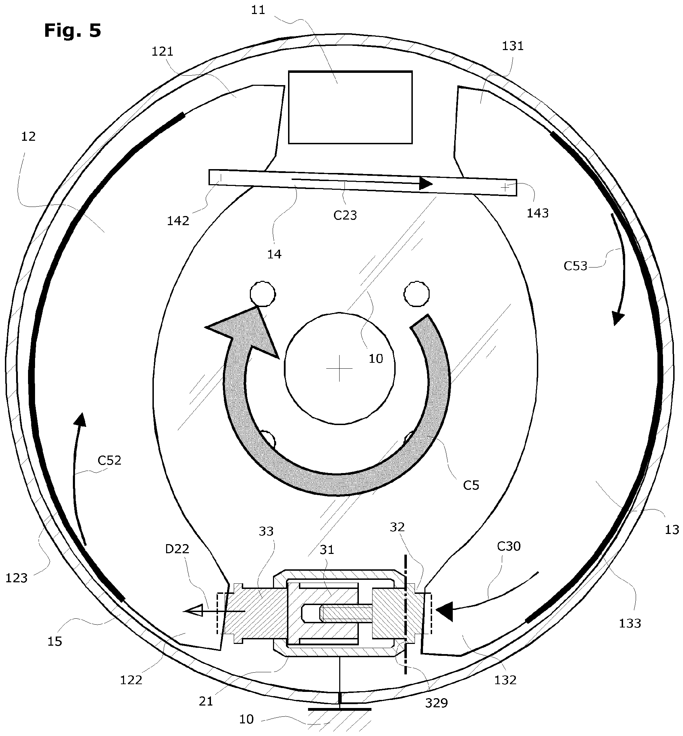

Comme illustré en FIGURE 4 et FIGURE 5, dès que qu'un couple de rotation, dans un sens C4 ou dans l'autre C5, est appliqué aux segments par le tambour 15 par rapport au plateau 10, par exemple du fait que le véhicule est stationné dans une pente ou que le frein de secours est actionné lorsque le véhicule est en mouvement, le tambour tend à entraîner les segments 12, 13 en rotation dans le sens de ce couple en raison du contact de friction entre segments et tambour.

La FIGURE 5 illustre plus particulièrement le cas d'un couple C5 dans le sens horaire. Par frottement, le "premier" segment 12 reçoit ainsi un couple C52 ce la part du tambour 15.

Par son extrémité opposée, c'est-à-dire son extrémité "mobile" 121, le premier segment 12 prend appui sur un élément intercalaire 14 par une articulation 142, par exemple une liaison pivot ou toute autre coopération de formes comme des encoches engagées entre elles.

L'élément intercalaire 14, par exemple une biellette, est mobile ou "flottant" par rapport au plateau 10, et est articulé de la même façon avec l'extrémité "mobile" 131 de l'autre segment 13, de façon à maintenir écartées l'une de l'autre leurs deux extrémités mobiles 121, 131. Dans le présent exemple, cet élément intercalaire est formé par une biellette qui porte aussi le mécanisme de rattrapage du jeu résultant de l'usure des garnitures 123, 133, comme illustré en FIGURE 2.

Il est à noter que cet élément intercalaire pourrait aussi être réalisé sous d'autres formes, par exemple par une plaque intercalaire en appui entre les deux segments. Il pourrait aussi être réalisé par le cylindre de roue s'il est monté flottant, à travers son boîtier ou ses pistons.

Sous l'appui du premier segment 12, l'élément intercalaire 14 transmet ainsi un appui C23 à l'extrémité mobile 131 du deuxième segment 13, de façon sensiblement tangentielle autour de l'axe de rotation A1.

Sous l'appui de l'élément intercalaire 14, le deuxième segment 13 prend appui sur la piste du tambour 15, et reçoit lui aussi par frottement un couple C53 de la part du tambour. Par son extrémité opposée, c'est-à-dire l'extrémité "de butée" 132, ce deuxième segment transmet au piston 32 l'ensemble C30 des couples reçus.

Par rapport au boîtier 21 de l'écarteur 2, l'ensemble d'actionnement 3 est monté libre en translation tangentielle autour de l'axe de rotation A1, sur une course limitée par une butée de chaque côté de sa position centrale. Dans le sens de rotation de la FIGURE 5, sous l'effet des couples C52 et C53 transmis par le tambour 15, les segments ont ainsi pour effet de déplacer l'ensemble d'actionnement 3 dans le sens de ces couples, soit dans une direction D22 selon la flèche blanche vers la gauche et jusqu'à la position de butée illustrée sur la figure.

Ainsi, dans le mode de frein de stationnement ou de secours, l'extrémité de butée 132 du deuxième segment 13 prend appui sur le boîtier 21 de l'écarteur pour transmettre au plateau 10 le couple de freinage ou de maintien créé par l'appui des segments sur le tambour.

Dans le présent exemple, l'extrémité de butée 132 du deuxième segment 13 et le boîtier 21 du deuxième actionneur 2 prennent appui l'un sur l'autre par l'intermédiaire du deuxième piston 32, par exemple par un accident de forme, ici un épaulement 329 porté par le piston en vis-à-vis de la surface extérieure du boîtier 21 au niveau de la ligne verticale en trait mixte sur la figure.

Dans ce sens de rotation de la FIGURE 5, le segment dont l'extrémité écartée 122 reçoit en premier le mouvement du tambour est le segment 12 de gauche sur la figure, qui pivote et s'arcboute sur un pivot 142 de son extrémité opposée et forme ainsi un segment "comprimé". De façon proche, recevant ainsi un effort tangentiel par son extrémité 131 recevant le mouvement, le deuxième segment 13 se comporte lui aussi en segment "comprimé" en s'arcboutant sur son extrémité de butée 132.

Ainsi, en mode de frein de stationnement ou de secours, l'activation du deuxième actionneur 2 fait fonctionner ce même ensemble de frein 1 sur le mode "duo servo", qui fournit un effort d'appui contre le tambour beaucoup plus important que le mode simplex du frein de service, pour un même effort d'actionnement des segments.

Dans le sens de rotation de la FIGURE 4 de façon inversée, un couple C4 dans l'autre sens entraîne les segments 12, 13 et l'élément intercalaire 14 dans l'autre sens, ce qui déplace l'ensemble d'actionnement 3 dans une direction D23 opposée, selon la flèche blanche vers la droite et jusqu'à la position de butée illustrée sur la figure. Le couple de freinage est alors transmis par l'extrémité de butée 122 du segment de gauche 12 sur le boîtier 21 de l'écarteur, par l'intermédiaire de l'épaulement 339 du premier piston 33, au niveau de la ligne verticale en trait mixte sur la figure.

Ce mécanisme de frein à tambour 1 bi-mode est ici représenté dans un exemple avec un actionneur 11 de frein de service fonctionnant par énergie hydraulique, et un actionneur 2 de frein de stationnement et secours fonctionnant par énergie électrique. Cependant, l'architecture de ce mécanisme peut aussi fonctionner et est aussi prévue avec d'autres types d'énergie pour chacun de ces actionneurs, par exemple par énergie hydraulique ou directement par commande mécanique.

### Structure de l'actionneur de frein de stationnement et de secours

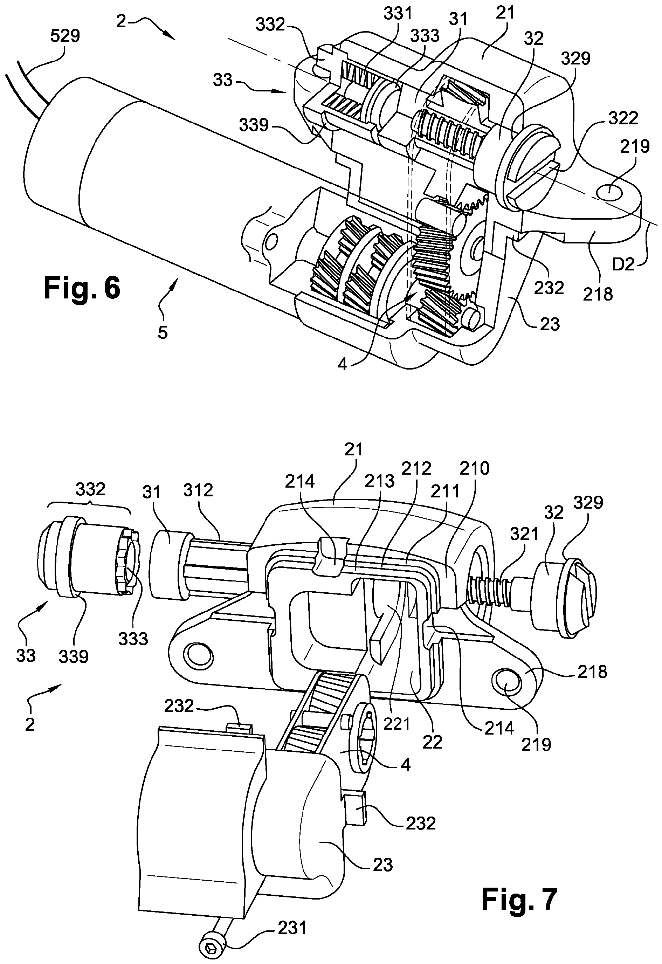

La structure et le fonctionnement du deuxième actionneur 2, ici appelé aussi écarteur, vont maintenant être décrits plus en détail en référence aux FIGURE 6 à FIGURE 9. La FIGURE 6 illustre l'ensemble de l'actionneur de frein de stationnement et de secours du mécanisme de la FIGURE 2.

Il est à noter que toutes les caractéristiques de l'écarteur 2, présenté ici comme deuxième actionneur au sein d'un frein à tambour bi-mode 1, peuvent aussi être mises en oeuvre dans un actionneur similaire ou même identique pour réaliser d'autres types de frein à tambour. En particulier, il est ici proposé explicitement de l'utiliser pour réaliser un frein à tambour fonctionnement uniquement en mode duo-servo. Par rapport au dispositif présenté ici, il peut suffire pour cela de supprimer le premier actionneur 11. Un tel frein monomode duo-servo est par exemple proposé sous une forme intégrée dans la cloche centrale d'un disque de frein, qui forme alors un tambour portant une piste de frottement sur sa surface intérieure coaxialement au disque de frein, en une architecture parfois appelée "Drum In Hat".

### Ensemble d'actionnement linéaire

La fonction de frein de stationnement nécessite le plus souvent de pouvoir laisser le dispositif en position freinée pendant une période prolongée sans action extérieure, par exemple de quelques minutes à plusieurs mois ou même années, et avec très peu et de préférence aucune consommation d'énergie. Le véhicule comporte donc en général un mécanisme assurant une fonction de blocage en position de freinage de stationnement, et le plus souvent aussi une fonction de stabilisation des efforts dans la chaîne mécanique réalisant l'appui des segments sur le tambour en cas de variations dimensionnelles des éléments qui la constituent. Sur les dispositifs comme celui de la FIGURE 1, ces fonctions sont assurées par un cliquet retenant l'organe ou le levier de manoeuvre du "frein à main" et respectivement par une élasticité du câble de commande 99 muni de sa gaine.

Dans le mode de réalisation de la FIGURE 2, pour fournir la fonction de stabilisation des efforts dans la chaîne d'appui, le deuxième actionneur 2 écarte les extrémités de butée 122, 132 des deux segments par l'intermédiaire d'un élément déformable élastiquement selon l'axe du mouvement d'actionnement, dit élément élastique, aussi appelé "spring pack" en Anglais. Dans ce mode de réalisation, cet élément élastique est réalisé par l'un des deux pistons, ici le premier piston 33. En fonction des efforts transmis sur la direction de déplacement D2 de l'écarteur, cet élément élastique présente une raideur déterminée pour fournir une course permettant de maintenir ou rétablir un appui suffisant des segments contre le tambour dans différentes circonstances ou changements de situations.

En particulier, cet élément élastique est ainsi susceptible d'emmagasiner, par compression dans l'ensemble d'actionnement 3 lors d'une activation dudit deuxième actionneur alors que le dispositif est dans la première position de freinage, une quantité d'énergie mécanique suffisante pour maintenir ou amener le dispositif dans la deuxième position de freinage si l'appui du premier actionneur 11 est interrompu après une désactivation dudit deuxième actionneur 2, sans nécessiter d'activer à nouveau ledit deuxième actionneur.

Une telle situation se produit par exemple lorsque le conducteur arrête le véhicule et le maintient arrêté à l'aide du frein de service, puis enclenche le frein de stationnement avant de relâcher la commande du frein de service, par exemple lors d'un arrêt pour stationnement dans une pente. Cette réserve élastique permet de combler les courses qui sont nécessaires au passage d'une position de freinage à l'autre, par exemple du mode simplex au mode duo servo, tout en assurant une charge suffisante pour satisfaire aux besoins de l'immobilisation du véhicule.

La course de cet élément élastique 33 permet aussi, au cours d'une variation de dimensions d'éléments 12, 13 du frein à tambour 1, et sans activation du deuxième actionneur 2 :
- de maintenir l'effort d'appui des segments 12, 13 contre la piste de frottement en cas de variations dimensionnelles dans un sens, par exemple en cas de rétraction thermique des segments ou des éléments de la chaîne mécanique créant cet appui, tels que les pistons ou le mécanisme qui les écarte, ou par exemple en cas de dilatation thermique du tambour ; et
- de limiter l'augmentation des efforts dans le mécanisme en cas de variations dimensionnelles dans l'autre sens, pouvant être causée par exemple par une rétraction thermique du tambour lorsque celui-ci se refroidit à l'arrêt après avoir été échauffé en tant que frein de service au cours d'un trajet.

Cet élément élastique permet ainsi de limiter et le plus souvent d'éviter tout besoin de réactivation automatique du système en cours de stationnement, aussi appelé "re-clamping", qui peut être consommateur d'énergie et sujet à des dysfonctionnements pouvant être lourds de conséquences.

Dans les modes de réalisation où le mouvement de l'écarteur est obtenu par un mécanisme de type irréversible, l'élément élastique est situé en aval du mécanisme irréversible.

Comme illustré en FIGURE 6, cet élément élastique est ici réalisé par le premier piston 33 qui comprend une tête de piston 332 présentant vers l'arrière une jupe à l'intérieur de laquelle peut coulisser un fond de piston 333. La tête de piston et le fond de piston viennent en appui l'un contre l'autre par l'intermédiaire d'une structure élastique compressible 331, ici un empilement avantageusement précontraint de rondelles coniques en acier, dites rondelles "Belleville". L'ensemble est ici maintenu par un sertissage de l'extrémité de la jupe autour de l'arrière du fond de piston 333.

Dans le mode de réalisation de la FIGURE 2, l'ensemble d'actionnement linéaire 3 comprend un premier élément fileté et un deuxième élément fileté interagissant entre eux pour former un système vis-écrou. Ce système vis-écrou produit le mouvement linéaire sous l'effet d'une rotation de ce premier élément par rapport à ce deuxième élément. Il transforme le couple reçu par l'un 31 de ses éléments en deux forces axiales opposées sur chacun de ses éléments 31, 32 respectivement.

Dans ce mode de réalisation, l'angle de filetage de ce système vi-écrou est choisi pour que la transmission d'effort obtenue soit irréversible, en choisissant un angle de filetage qui est inférieur à l'angle de friction du couple de matériaux employé pour réaliser ces deux éléments.

Ce choix d'un système vis-écrou, combiné avec le choix d'un tel angle de filetage, produit une irréversibilité qui fournit la fonction de blocage en position de freinage de stationnement. C'est-à-dire qu'un effort reçu par les pistons 32, 33 depuis les segments 13, 12 est bloqué par le non-glissement entre les filetages des deux éléments du système vis-écrou. Il n'est ainsi pas transmis jusqu'à la motorisation, rendant ainsi inutile de bloquer le moteur ou de le maintenir en charge.

Par exemple, avec des pièces 31, 32 lubrifiées en acier forgé, le coefficient de friction est compris entre 0,1 et 0,2. Une valeur de 0,1 pour ce coefficient de friction détermine un angle de friction de φₗᵢₘᵢₜₑ=5,7°. Pour que la transmission d'effort soit irréversible, l'angle de filetage β du système doit être inférieur à l'angle de friction, soit β<5,7°.

Le principe de la transmission vis-écrou permet d'obtenir une très grande démultiplication, d'autant plus grande que l'angle de filetage est faible.

Dans le cas des motorisations électriques, en particulier, la motorisation est souvent de nature à fournir souvent des vitesses de rotation élevées, ce qui oblige à prévoir une très grande démultiplication pour obtenir un déplacement faible avec un effort suffisant. Il pourrait donc paraître intéressant d'utiliser un angle de filetage très faible pour fournir cette démultiplication et limiter le nombre d'engrenages intermédiaires.

Cependant, dans ce mode de réalisation, l'angle de filetage du système vis-écrou est choisi le plus grand possible tout en restant inférieur à l'angle de friction. Cela permet d'améliorer le rendement du système vis-écrou en lui-même. Cette particularité est particulièrement avantageuse combinée avec les caractéristiques de la transmission, décrite ci-après, qui permettent de fournir plus de démultiplication tout en gardant un bon rendement global.

Cet angle de filetage est choisi par exemple avec une valeur de 0,25° en dessous de l'angle limite, voire de 0,15° en dessous. Par exemple dans le cas d'un coefficient de friction de 0,1, avec un filetage à profil trapézoïdal à 15°, l'angle de filetage choisi sera compris entre 5,45° et 5,7°, ou même entre 5,55° et 5,7°, et de préférence avec une valeur de β=5,6°, 5,55° ou 5,7°.

Le contact de frottement contre les filetages mâle et femelle a lieu à flanc de filet sur une zone comprise entre les deux sommets de filet. Dans une version, l'angle d'hélice est mesuré dans cette zone, et de façon encore plus sécuritaire le long du sommet du filetage femelle. Dans une autre version, l'angle est mesuré le long du cercle de diamètre moyen de la zone de contact. En fonction du diamètre choisi on prend une marge de sécurité plus ou moins grande par rapport à l'angle de frottement. En tout état de cause, on fait en sorte que l'irréversibilité soit garantie en fonctionnement, y compris dans des conditions thermiques extrêmes et en cas d'usure des flancs de filet.

Comme visible par exemple en FIGURE 6 à FIGURE 8, ce système vis-écrou comprend l'un des pistons, ici le deuxième piston 32. Celui-ci prend la forme d'une vis-piston comprenant une partie mâle filetée 32, et une tête de piston portant une rainure 322 recevant la tranche d'un segment 13. Cette vis piston 32 interagit avec l'autre partie du système vis-écrou, formée par un écrou 31 muni d'un filetage intérieur. Alternativement, les éléments mâles et femelles du système vis-écrou pourraient être inversés. Dans le présent mode de réalisation, c'est l'écrou 31 qui reçoit le couple d'actionnement.

Dans un exemple de mise en oeuvre de ce mode de réalisation, un angle de filetage de 5,6° donne, en fonction du coefficient de friction, les valeurs suivantes pour :
- le ratio F / C = (force linéaire obtenue) / (couple appliqué), et
- le rendement énergétique de la transmission ainsi réalisée.

| coefficient de friction | 0,1 | 0,15 | 0,2 |
|---|---|---|---|
| F/C (N/N.m) | 1393 | 1100 | 913 |
| η (%) | 48 | 38 | 32 |

L'écrou 31 est le piston 33 sont en appui axial mutuel avec possibilité de rotation relative entre eux par glissement mutuel de leurs surfaces d'appui, de sorte que le piston 33 est non rotatif et immobilisé en rotation par la tranche de segment 12 qui est engagée dans une rainure 332 de la tête du piston.

### Ensemble de transmission

De façon différente, dans ce mode de réalisation, la rotation est transmise au système vis-écrou de l'ensemble d'actionnement linéaire 3 depuis une motorisation 5 rotative par un engrenage de transmission comprenant des roues dentées 41, 42, 43 à axes parallèles, engrenées entre elles et montées pour transmettre le mouvement rotatif de cette motorisation à l'élément rotatif du système vis-écrou.

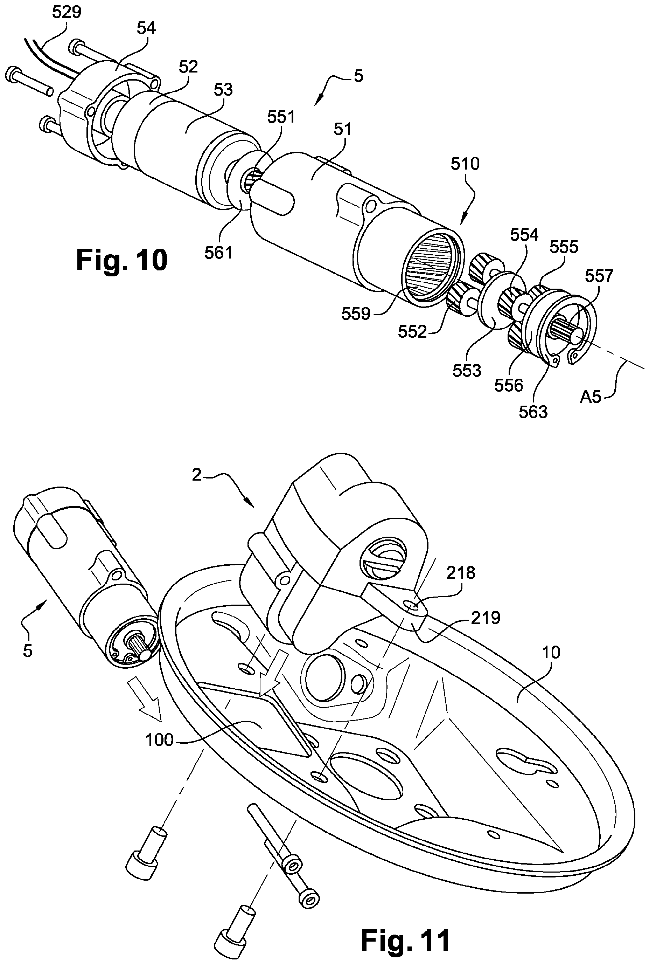

Les axes de ces roues dentées sont aussi parallèles à un axe A5 du moteur et à la direction D2 du mouvement linéaire obtenu, et aussi à l'axe de rotation de la motorisation, c'est-à-dire de l'ensemble motoréducteur 5. Comme illustré en FIGURE 10, cet axe de rotation est aussi celui du moteur électrique 52 qui anime l'ensemble motoréducteur 5.

Cette rotation est transmise à l'élément rotatif 31 du système vis-écrou par une forme extérieure, réalisée ici par des cannelures 312 d'entraînement portées par l'écrou 31.

L'ensemble d'actionnement 3 est monté dans le boîtier 21 de l'écarteur 2, aussi appelé boîtier principal. C'est ce boîtier 21 qui sert d'ancrage sur le plateau 10. Il est réalisé par exemple en métal, comme de la fonte d'aluminium. Sur ce boîtier principal est assemblé un boîtier secondaire 23, de façon à renfermer entre eux de façon étanche (au moins à la poussière) un sous-ensemble de transmission 4 comprenant plusieurs roues dentées à contact extérieur, ici trois roues dentées à denture hélicoïdale corrigée.

La roue de sortie 43 de ce sous-ensemble 4 entraîne l'écrou 31 du système vis-écrou par un alésage axial 430 portant une forme intérieure 431, ici des cannelures, entourant l'écrou 31 et coopérant avec sa forme extérieure 331.

La forme intérieure 431 de la roue de sortie 43 et la forme extérieure 331 de l'écrou 31 forment ensemble une liaison glissière libre en translation, et leurs géométries respectives sont déterminées pour autoriser un coulissement axial, selon la direction d'actionnement D2, d'une longueur suffisante pour permettre à l'ensemble d'actionnement de coulisser complètement jusqu'à venir en butée d'un côté 329 ou de l'autre 339 selon le sens du couple de freinage ou de maintien à transmettre, comme illustré en FIGURE 5 et respectivement FIGURE 4.

Le sous-ensemble de transmission 4 est entraîné par la roue d'entrée 41, elle-même entraînée par l'ensemble motoréducteur 5 assemblé et fixé sur le boîtier secondaire 23 de l'écarteur 2.

Dans un exemple de mise en oeuvre de ce mode de réalisation, les dentures et dimensions de ce sous-ensemble de transmission ont été déterminées pour produire une réduction de vitesse, définie par un rapport entre la vitesse angulaire de la roue d'entrée 41 et celle de la roue de sortie 43, d'une valeur supérieure à 2, et par exemple de ω_{entrée}/ωₛₒᵣₜᵢₑ=2,86, pour un rendement compris entre 0,89 et 0,94.

Dans ce mode de réalisation, la roue d'entrée 41 est couplée en rotation avec la motorisation 5, ici par emboîtement de son alésage 410 axial portant une forme d'entraînement 411 avec une forme d'entraînement complémentaire 558 portée par l'arbre de sortie 557 de l'ensemble motoréducteur 5.

La géométrie de ces deux formes d'entraînement complémentaires 558 et 411 sont avantageusement choisies d'un type qui permet entre elles un certain jeu angulaire avec peu ou pas de dommages et de pertes de rendement dans la puissance transmise.

Cette géométrie est ici de type multi-lobulaire, par exemple à six branches ou hexalobulaire tel que défini par la norme ISO 10664, ou dans une version à cinq branches, ou l'une ou l'autre des versions proposées sous le nom de "Torx" par la société Textron.

Dans ce mode de réalisation, le sous-ensemble de transmission 4 forme un sous-ensemble pré-assemblé, dit cartouche d'engrenages, comprenant une carcasse qui supporte les roues dentées 41, 42, 43 et les maintient dans leur position de fonctionnement, indépendamment de leur environnement extérieur.

La présence d'un sous-ensemble pré-assemblé au sein du dispositif simplifie grandement les étapes d'assemblage et de maintenance et contribue ainsi à réduire les coûts de production de façon systématique.

En outre, elle permet de garantir plus facilement et plus précisément une valeur optimale pour leur positionnement relatif, en particulier les entraxes entre roues dentées, ce qui participe grandement à l'obtention d'un rendement optimal de transmission.

Dans le présent exemple, la carcasse comprend deux plaques 48, 49 parallèles et identiques, par exemple métalliques, maintenues entre elles par des pièces de liaison 471, 472, 473 formant entretoises. Celles-ci sont vissées, rivetées ou emmanchées dans les plaques.

Les roues dentées sont maintenues entre les plaques et leurs arbres sont positionnés dans des ouvertures ménagées dans les plaques et pouvant servir de paliers. L'arbre de certaines roues dentées, en particulier la ou les roues intermédiaires, ici l'arbre 473 de la roue intermédiaire 42, fait aussi office d'entretoise.

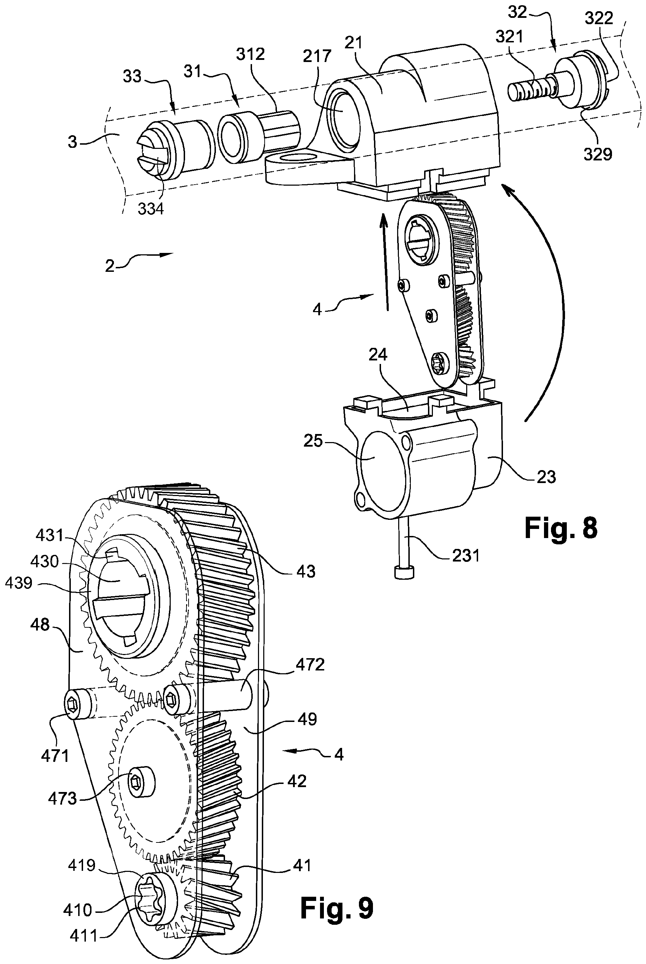

Ainsi qu'on le voit en FIGURE 7 et FIGURE 8, le boîtier principal 21 de l'écarteur 2 est muni d'un logement de transmission 22 s'ouvrant du côté du plateau 10, et qui reçoit une partie du sous-ensemble de transmission 4 incluant la roue de sortie 43. Ce logement 22 intersecte le logement 217 formé par un alésage traversant le boîtier principal et recevant l'ensemble d'actionnement linéaire 3.

Le boîtier secondaire 23 de l'écarteur est assemblé avec le premier boîtier de façon à renfermer de façon étanche la cartouche d'engrenage 4 dans son propre logement de transmission 24, lequel reçoit ainsi la roue d'entrée 41 de l'engrenage.

Les parois de ces logements 22 et 24 présentent une ou plusieurs rainures positionnées pour former un guidage en translation de la cartouche lors de son insertion, par exemple en guidant les têtes d'entretoise et d'arbres des roues qui dépassent vers l'extérieur des plaques parallèles. En particulier, l'une 221 de ces rainures comporte une surface intérieure en arc de cercle autour de l'axe de la roue de sortie 43, et forme ainsi une butée radiale de centrage autour de la partie de son arbre 439 qui dépasse de la carcasse 48.

Une fois la cartouche 4 en place dans le boîtier principal 21, sa roue de sortie 43 est en place dans le logement de l'ensemble d'actionnement, dont les éléments 31, 32, 33 peuvent alors y être insérés.

Le boîtier secondaire 23 est aussi muni d'un logement 25 qui reçoit l'arbre de sortie 557 de l'ensemble motoréducteur 5, et sur lequel son boîtier 51 vient s'assembler de façon étanche. Une fois la cartouche 4 en place dans le logement 24 du boîtier secondaire, sa roue d'entrée 41 est en place dans ce logement 25 de motoréducteur, et l'arbre de sortie 557 du motoréducteur 5 peut alors y être inséré.

Comme illustré en FIGURE 11, l'écarteur 2 est monté et fixé sur le plateau, engagé de façon étanche dans une ouverture 100. L'ensemble motoréducteur 5 est alors assemblé sur l'écarteur, sur la partie de son boîtier secondaire qui dépasse du plateau du côté opposé aux segments, c'est-à-dire du côté "arrière" du plateau.

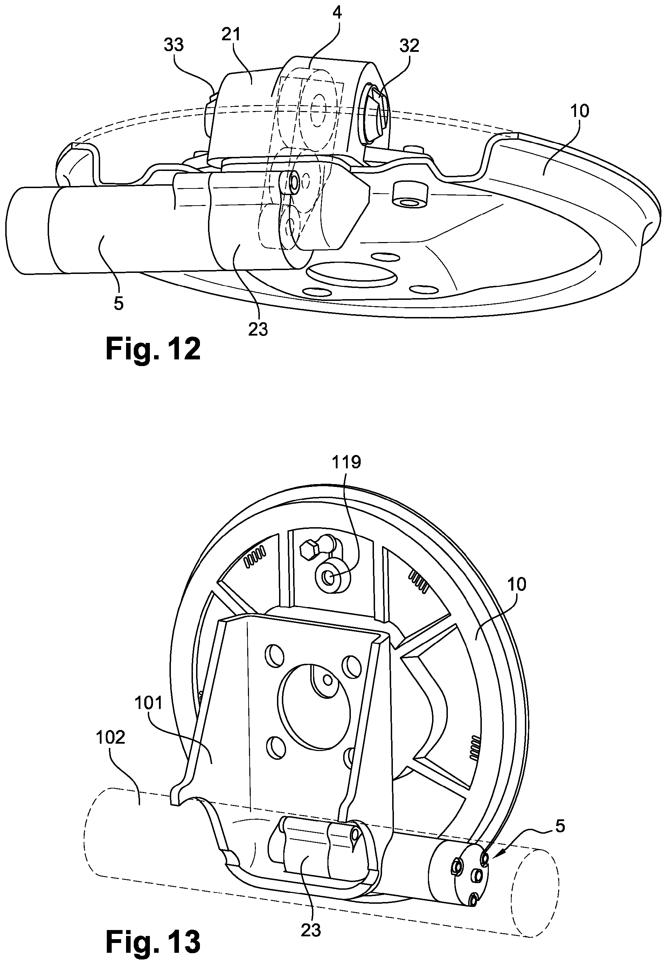

Ainsi, comme illustré en FIGURE 12, la cartouche d'engrenage 4 s'étend à travers une l'ouverture 100 du plateau support 10. La motorisation 5 et le système vis-écrou 31, 32 ont ainsi des axes sensiblement parallèles et disposés de deux côtés opposés l'un de l'autre par rapport au plateau 10.

Comme on le voit en FIGURE 13, la motorisation 5 est la seule partie du mécanisme à dépasser à l'arrière du plateau 10. Son encombrement en est ainsi limité, et elle peut être logée dans une découpe de petite taille dans la ferrure 101 de fixation du plateau 10, par exemple sur un bras oscillant 102 d'un demi-train arrière.

L'écarteur 2 est fixé sur le plateau 10 de façon solidaire par son boîtier principal 21, qui remplit aussi le rôle de butée transmettant le couple de freinage ou de maintien entre les segments 12, 13 et le plateau, dans les deux modes de fonctionnement. Ce boîtier principal est réalisé par exemple en métal moulé et usiné, par exemple de la fonte d'aluminium.

Il est fixé au plateau par rivetage ou boulonnage au travers d'orifices de fixation 219 pratiqués dans des linguets 218 dépassant vers l'extérieur de son empreinte sur le plateau pour former des pattes de fixation. Ces orifices de fixation 219 sont ici au nombre de deux, alignés sur une direction sensiblement tangentielle à l'axe de rotation A1 et situés vers l'intérieur du côté de cet axe de rotation par rapport à la direction d'actionnement D2 de l'écarteur.

L'ancrage du boîtier principal 21 sur le plateau est assuré par une surface d'appui 210 principale de ce boîtier qui est ainsi pressée au contact du plateau. Comme il est visible sur la FIGURE 7, cette surface d'appui 210 forme une première feuillure avec la surface extérieure d'une première avancée 211, saillant de la surface d'appui et dépassant au travers de l'ouverture de fixation 100 du plateau. La surface extérieure de cette première avancée 211 présente un profil déterminé pour coopérer avec le pourtour de l'ouverture de fixation 100 du plateau et réaliser le centrage du boîtier principal par rapport à cette ouverture 100.

Cette première avancée se termine par un épaulement formant une deuxième surface d'appui 212, sur laquelle vient s'appuyer le boîtier secondaire de l'écarteur. Cette deuxième surface d'appui 212 forme une deuxième feuillure avec la surface extérieure d'une deuxième avancée 213, saillant par rapport à la deuxième surface d'appui et dépassant à l'intérieur du logement de transmission 24 du boîtier secondaire. La surface extérieure de cette deuxième avancée 213 présente un profil déterminé pour coopérer avec le pourtour de l'ouverture du logement de transmission 24 du boîtier secondaire et réaliser le centrage du boîtier secondaire par rapport au boîtier principal.

Sur chacun des quatre côtés du logement de transmission 22 du boîtier principal 21, les deux feuillures sont traversées par un évidement 214 dans lequel vient s'encastrer une patte de fixation 232 qui dépasse du boîtier secondaire. L'évidement se poursuit jusqu'à avancer dans la surface d'appui principale 210 du boîtier principal, où il reçoit l'extrémité de cette patte de fixation 232. Celle-ci est dimensionnée d'une épaisseur suffisante par rapport à l'évidement 214 pour être serrée fortement entre le boîtier principal 21 et le plateau lorsqu'ils sont fixés l'un à l'autre.

Ainsi, la fixation du boîtier principal 21 sur le plateau réalise aussi le serrage de son assemblage avec le boîtier secondaire. L'assemblage préalable des deux boîtiers 21, 23 ne nécessite que pas ou peu de moyens de fixation, par exemple un simple clipsage ou une unique vis 231 comme illustré en FIGURE 8.

### Ensemble motoréducteur

Dans le mode de réalisation ici présenté, le deuxième actionneur 2, ou écarteur, est entraîné par un élément de motorisation 5 comprenant au moins un moteur électrique 52, par exemple à courant continu.

Cependant, les caractéristiques de l'écarteur 2 telles que présentées ici peuvent aussi être mises en oeuvre avec d'autres types de motorisation, par exemple hydraulique.

Dans le mode de réalisation de la FIGURE 2, le moteur électrique 52 est par exemple de forme globalement cylindrique. Ce moteur est renfermé dans un boîtier 51 de forme globalement cylindrique, sur lequel est assemblé de façon étanche un couvercle arrière 54, qui est traversé de façon étanche par les fils électriques 529 d'alimentation et/ou de commande du moteur.

Avantageusement, le boîtier 51 est prévu avec un logement intérieur cylindrique d'un diamètre suffisamment grand pour pouvoir accueillir des moteurs de plusieurs diamètres différents. Il est ainsi possible de fabriquer des motoréducteurs 5 de plusieurs valeurs de puissance différentes avec un même modèle de boîtier, en utilisant des moteurs de plusieurs puissances différentes et donc de plusieurs diamètres différents, par exemple jusqu'à 34 mm.

Pour bien positionner et maintenir le moteur dans le boîtier, quel que soit le diamètre du moteur, celui-ci est emboîté dans une enveloppe cylindrique 53 dont l'épaisseur représente la différence entre le rayon du moteur 52 et celui du logement intérieur du boîtier 51. Pour une gamme donnée de moteurs de diamètres différents, il suffit ainsi de fabriquer une gamme d'enveloppes aux diamètres correspondant, ce qui est plus simple et économique de fabriquer des boîtiers de dimensions différentes.

Alternativement, le couvercle arrière 54 est prévu avec une forme qui intègre l'enveloppe de calage 53. En variante ce couvercle présente une forme plus allongée que celle représentée, de façon à recouvrir toute la longueur du moteur 52. Dans ce cas, la gamme de moteurs différents correspond avantageusement à une gamme de couvercles différents, pour un même boîtier 51.

L'enveloppe cylindrique de calage 53, ou le couvercle 54 s'il la remplace, est en outre réalisée d'une matière qui forme un écran contre les perturbations électromagnétiques et/ou qui réalise un diffuseur thermique pour la chaleur produite par le moteur, et de préférence les deux.

Du côté de l'arbre du moteur, le boîtier 51 comporte une ouverture de sortie 510 cylindrique renfermant un sous-ensemble d'engrenages de réduction, qui est entraîné en entrée par le moteur et entraîne en sortie l'arbre de sortie 557 de l'ensemble motoréducteur.

L'arbre du moteur traverse un flasque d'étanchéité 561. Il porte un pignon 551 qui lui est solidaire et forme un planétaire entraînant un premier train épicycloïdal dans lequel ce planétaire engrène avec des premiers satellites 552 engrenant eux-mêmes avec une première couronne extérieure solidaire de la paroi intérieure de l'ouverture de sortie 510 du boîtier 51. Ces premiers satellites 552 sont montés sur un premier porte-satellites 553, qu'ils entraînent pour former la sortie du premier train épicycloïdal. Ce premier porte-satellites 553 porte un pignon planétaire 554 dont il est solidaire, formant l'entrée d'un deuxième train épicycloïdal dans lequel ce planétaire engrène avec des deuxièmes satellites 555 engrenant eux-mêmes avec une deuxième couronne extérieure solidaire de la paroi intérieure de l'ouverture de sortie 510 du boîtier 51. Ces deuxièmes satellites 555 sont montés sur un deuxième porte-satellites 556, qu'ils entraînent pour former la sortie du deuxième train épicycloïdal. Ce deuxième porte-satellites 556 porte l'arbre de sortie 557 du motoréducteur 5, dont il est solidaire, et est maintenu en position contre un épaulement de l'ouverture 510 du boîtier par un jonc d'arrêt élastique intérieur 563, typiquement un "circlips".

Dans ce mode de réalisation, la première et la deuxième couronnes présentent une même denture 559 continue pour les deux trains épicycloïdaux, de préférence à denture hélicoïdale corrigée, qui est taillée ou moulée directement dans la matière du boîtier 51 de motoréducteur.

Le boîtier 51 et le couvercle 54 du motoréducteur peuvent être réalisés par exemple en métal moulé, ou en polymère chargé de fibres de verre. Les satellites 552, 555 sont réalisés par exemple en POM (polyoxyméthylène). Les porte-satellites 553, 556 et leurs arbres de sortie 554, 557 avec la forme d'entraînement de sortie sont réalisés par exemple en acier, usiné ou par frittage laser.

Dans un exemple de mise en oeuvre de ce mode de réalisation, les dentures et dimensions de cet ensemble motoréducteur 5 ont été déterminées pour produire un rapport de réduction d'une valeur de ωₘₒₜₑᵤᵣ/ωₛₒᵣₜᵢₑ=23,04 pour un rendement compris entre 0,85 et 0,92.

### Performances de l'actionneur de frein de stationnement

Le tableau ci-après donne une estimation des valeurs de rendement énergétique "η" obtenues pour l'écarteur 2 dans sa totalité, dans le mode de réalisation ici présenté, à partir des rendements de ses différents éléments : motoréducteur (MGU), cartouche de transmission 4 à trois axes parallèles, et système vis-écrou 31, 32, et pour les deux bornes d'une plage de coefficients de friction allant de 0,1 à 0,2 :

| **coefficient de friction** : | **f=0,2** | **f=0,1** |
|---|---|---|
| MGU | 85 % | 92 % |
| cartouche | 59 % | 94 % |
| vis-écrou | 32 % | 48 % |
| total de l'écarteur | 24 % | 42 % |

Dans ce cadre, il a été réalisé une évaluation des performances de l'actionneur de stationnement au sein du frein bi-mode selon l'invention dans une dimension standard, de l'ordre de 220mm pour le diamètre intérieur du tambour

Pour un moteur électrique à courant continu sous une tension de 12V, d'un rendement variant entre 40% et 60% selon les conditions de charge, et pour l'usure maximale autorisée pour les garnitures de frottement, cette évaluation donne les performances suivantes :
∘ Temps de serrage au rendement maximum = 0,97 s
∘ Avec une intensité électrique de 6 A ; et
∘ Temps de serrage au rendement minimum = 1,05 s
∘ Avec une intensité électrique de 8,5 A.

La combinaison des caractéristiques du mode de réalisation de l'invention tel que présenté ici permet ainsi d'obtenir des performances suffisantes pour une mise en oeuvre dans de nombreuses configurations, avec un mode de commande adapté aux demandes actuelles et futures en matière automobile, tout en autorisant une grande flexibilité de conception, d'intégration et de fabrication au sein de véhicules en cours de production ou en conception.

### Adaptation à l'existant

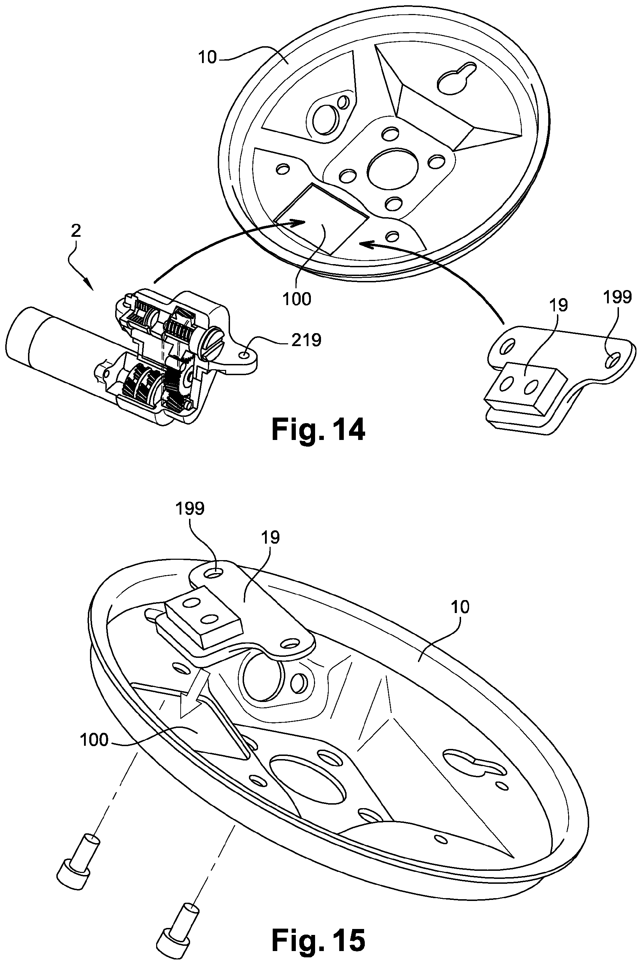

Comme illustré en FIGURE 14, le même plateau 10 permet de réaliser plusieurs types de frein à tambour.

Au cours du processus de conception, mais aussi au cours du processus de fabrication en usine, l'invention prévoit de choisir entre plusieurs possibilités, possiblement même lorsque le plateau est déjà fixé sur le véhicule ou sur un sous ensemble de véhicule.

Une possibilité est de fixer dans l'ouverture 100 du plateau un écarteur 2 comme décrit ci-dessus, pour réaliser un frein à tambour bi-mode fonctionnant en simplex en tant que frein de service et en duo-servo en tant que frein électrique de stationnement ou de secours.

Une autre possibilité est de fixer dans l'ouverture 100 du même plateau une plaque de butée 19 inerte, préalablement fabriquée à cet effet. Une telle plaque de butée comporte des ouvertures de fixation 199 positionnées de la même façon que celles 219 de l'écarteur 2, et porte sur sa face au contact du plateau des formes d'assemblage identiques à la première feuillure 210, 212 du boîtier principal 21 de l'écarteur. Elle peut donc se monter dans la même ouverture 100 du plateau, et ainsi permettre sélectivement la réalisation simple et flexible d'un frein à tambour analogue à un frein 9 de type connu fonctionnant uniquement en simplex, par exemple avec un levier de frein de stationnement 97 actionné par câble de commande 99 comme celui de la FIGURE 1

Ainsi, en adoptant un plateau 10 compatible avec l'écarteur 2, et prévoyant une simple plaque de butée 19 adaptée à ce plateau, il est possible de prévoir ou de poursuivre la fabrication d'un véhicule doté d'un frein à tambour d'un type classique, tout en bénéficiant à tout moment de la possibilité de choisir le montage d'un frein bi-mode à frein de stationnement électrique.

Le plateau 10 et la plaque de butée 19 représentent un coût extrêmement faible et des contraintes faibles ou inexistantes sur la conception et la fabrication.

Il est ainsi possible par exemple de prévoir des gammes de véhicules avec différentes options de types de frein, de limiter les approvisionnements au sein d'une même chaîne de montage, ou d'adapter des chaînes existantes ou des modèles de véhicule existants pour les doter de ces différentes options, à moindre coût et de façon souple.

Bien sûr, l'invention n'est pas limitée aux exemples qui viennent d'être décrits et de nombreux aménagements peuvent être apportés à ces exemples sans sortir du cadre de l'invention.

### Nomenclature

- 1: frein à tambour
- 10: plateau support
- 100: ouverture de fixation de point d'appui
- 101: ferrure de fixation du plateau
- 102: bras oscillant de demi-train roulant
- 11: premier actionneur - cylindre de roue - frein de service
- 111, 112: pistons de cylindre de roue
- 119: arrivée hydraulique du cylindre de roue
- 12, 13: segments
- 121, 131: extrémités mobiles des segments
- 122, 132: extrémités de butée des segments
- 123, 133: garnitures de frottement
- 14: élément intercalaire - biellette de rattrapage de jeu
- 142, 143: articulations d'élément intercalaire
- 15: tambour de roue
- 16: piste de frottement du tambour
- 19: plaque de butée de frein en version uniquement simplex
- 198: pattes de fixation de plaque de butée
- 199: orifices de fixation de plaque de butée
- 2: deuxième actionneur - écarteur - frein de stationnement
- 21: boîtier principal d'écarteur
- 210: surface d'appui principale (première feuillure)
- 211: première avancée - centrage sur plateau (première feuillure)
- 212: épaulement formant la deuxième surface d'appui (deuxième feuillure)
- 213: deuxième avancée - centrage du boîtier secondaire (deuxième feuillure)
- 214: évidement accueillant une patte de fixation du boîtier secondaire
- 217: logement recevant l'ensemble d'actionnement
- 218: linguets de fixation de boîtier principal
- 219: orifices de fixation de boîtier principal
- 22: logement de la cartouche dans le boîtier principal
- 221: rainures de guidage des têtes d'entretoise de la cartouche
- 23: boîtier secondaire d'écarteur
- 231: vis de fixation du boîtier secondaire sur le boîtier principal
- 232: pattes de fixation du boîtier secondaire
- 24: logement de la cartouche dans le boîtier secondaire
- 25: logement de motoréducteur dans le boîtier secondaire
- 3: ensemble d'actionnement linéaire
- 31: écrou cannelé de système vis-écrou
- 311: filetage d'écrou cannelé
- 312: cannelures externes de l'écrou
- 32: vis de système vis-écrou, formant piston
- 321: filetage de vis-piston
- 322: rainure de vis-piston
- 329: épaulement d'appui de la vis-piston - transmission du couple de freinage
- 33: piston élastique linéaire - "spring package"
- 331: élément élastique - empilement de rondelles Belleville
- 332: tête de piston élastique, dont la jupe est sertie derrière le fond de piston
- 333: fond de piston élastique
- 334: rainure de tête de piston
- 339: épaulement d'appui du piston élastique - transmission du couple de freinage
- 4: sous-ensemble de transmission - cartouche d'engrenages
- 41: 1° roue dentée - roue d'entrée
- 410: alésage axial de roue d'entrée
- 411: forme intérieure d'entraînement de la roue d'entrée (hexalobulaire)
- 419, 439: arbres de 1° et 3° roues dentées
- 42: 2° roue dentée - roue intermédiaire
- 43: 3° roue dentée - roue de sortie
- 430: alésage axial de roue de sortie
- 431: cannelures intérieures de roue de sortie
- 471, 472: entretoises
- 473: arbre de 2° roue dentée - faisant entretoise
- 48, 49: plaques de maintien
- 481: pattes de maintien élastiques
- 5: ensemble motoréducteur
- 51: boîtier de motoréducteur
- 510: ouverture de sortie cylindrique - logement de train épicycloïdal
- 511: ouverture d'entrée cylindrique - logement de moteur
- 52: moteur électrique
- 529: alimentation électrique du moteur
- 53: enveloppe cylindrique de calage - formant écran électromagnétique et diffuseur thermique
- 54: couvercle arrière de moteur
- 541: forme de calage du couvercle arrière
- 542: paroi du couvercle arrière
- 55: mécanisme de réduction épicycloïdal
- 551: pignon planétaire de 1° train épicycloïdal - pignon d'entrée
- 552: pignons satellites de 1° train épicycloïdal
- 553: porte satellites de 1° train épicycloïdal
- 554: pignon planétaire de 2° train épicycloïdal
- 555: pignons satellites de 2° train épicycloïdal
- 556: porte satellites de 2° train épicycloïdal
- 557: arbre de sortie
- 558: forme extérieure d'entraînement de l'arbre de sortie (hexalobulaire)
- 559: couronne des trains épicycloïdaux
- 561: flasque de guidage et étanchéité d'entrée
- 563: circlips de fixation de sortie

### Art Antérieur

- 9: frein à tambour
- 90: plateau support
- 91: cylindre de roue
- 92, 93: segments
- 923, 933: garnitures de frottement
- 94: plaque de butée
- 95: tambour de roue
- 96: piste de frottement du tambour
- 97: levier de frein de stationnement
- 98: élément de réaction du frein de stationnement
- 99: câble de commande de frein de stationnement

## Revendications

1. Dispositif de frein à tambour (1) pour véhicule routier, notamment automobile,
du type provoquant un couple de freinage entre un tambour et un plateau (10) en mouvement de rotation l'un par rapport à l'autre, par absorption d'énergie sous l'effet d'un frottement entre,
d'une part, une piste de frottement formant un cylindre de révolution et qui est portée par une surface intérieure dudit tambour,
et d'autre part des garnitures de frottement (123, 133) portées par un premier et un deuxième segments (12, 13) disposés à l'intérieur dudit cylindre et transmettant le couple de freinage audit plateau au moins par un élément dit d'ancrage formant une butée pour les segments,
ledit frottement étant susceptible d'être obtenu par écartement d'au moins l'un desdits segments vers l'extérieur sous l'effet d'au moins un premier actionneur (11), assurant ainsi une fonction de freinage dans un premier mode de fonctionnement qui amène le dispositif dans une première position de freinage,
ledit dispositif étant **caractérisé en ce qu'**il comprend un élément dit intercalaire (14), qui est mobile par rapport au plateau (10) et qui est agencé pour maintenir écartées l'une de l'autre deux extrémités desdits segments qui sont en vis à vis l'une de l'autre, dites extrémités mobiles (121, 131),
**en ce qu'**il comprend en outre au moins un deuxième actionneur (2) agencé pour pouvoir écarter l'une de l'autre les extrémités desdits segments situées du côté opposé, dites extrémités de butée (122, 132), et mettre ainsi lesdits segments en appui contre la piste de frottement du tambour,
permettant ainsi par frottement de transmettre un couple de freinage ou de maintien à l'arrêt entre ledit tambour et un premier segment (12), lequel prend appui par son extrémité mobile (121) sur ledit élément intercalaire (14), lequel prend appui sur l'extrémité mobile (131) du deuxième segment (13), lequel transmet au plateau (10) ledit couple de freinage ou de maintien par son extrémité de butée (132), assurant ainsi une fonction de freinage dans un deuxième mode de fonctionnement qui amène le dispositif dans une deuxième position de freinage.

2. Dispositif de frein à tambour selon la revendication précédente, **caractérisé en ce que** le premier actionneur (11) actionne les deux segments (12, 13) en écartant l'une de l'autre leurs extrémités mobiles (121, 131).

3. Dispositif selon l'une quelconque des revendications précédentes, **caractérisé en ce que** l'élément intercalaire est réalisé par une biellette articulée sur chacune des extrémités mobiles (121, 131) des deux segments, et qui agencée pour réaliser un mécanisme de rattrapage du jeu résultant de l'usure par frottement des garnitures (123, 133) contre la piste de frottement du tambour.

4. Dispositif selon l'une quelconque des revendications précédentes, **caractérisé en ce que** le deuxième actionneur (2) est monté solidaire du plateau (10) par au moins un boîtier (21) sur lequel les extrémités de butée (122, 132) des deux segments (12, 13) prennent appui, directement ou indirectement par l'intermédiaire de pistons du deuxième actionneur, pour transmettre au plateau (10) le couple de freinage ou maintien de l'un au moins des segments, lors d'un actionnement dudit dispositif dans le premier mode de fonctionnement.

5. Dispositif selon l'une quelconque des revendications précédentes, **caractérisé en ce que** le premier actionneur (11) est d'un type fonctionnant par déplacement d'un ou plusieurs pistons (111) sous l'effet d'une pression hydraulique.

6. Dispositif selon l'une quelconque des revendications 1 à 4, **caractérisé en ce que** le premier actionneur (11) est d'un type fonctionnant par déplacement d'un ou plusieurs pistons sous l'effet d'une motorisation électrique.

7. Dispositif selon l'une quelconque des revendications précédentes, **caractérisé en ce que** le deuxième actionneur est entraîné par un élément de motorisation (5) comprenant au moins un moteur électrique (52).

8. Dispositif selon la revendication précédente, **caractérisé en ce que** l'élément de motorisation (5) du deuxième actionneur (2) comprend un sous ensemble électronique agencé pour recevoir un signal de commande électronique reçu par une connexion électronique de commande et interpréter ledit signal de commande pour alimenter le moteur électrique (52) à l'aide d'une énergie électrique reçue par une connexion électrique différente de la connexion de commande.

9. Dispositif selon l'une quelconque des revendications 1 à 8, **caractérisé en ce que** le deuxième actionneur est d'un type fonctionnant par réception d'une commande au travers d'un organe mécanique.

10. Dispositif selon l'une quelconque des revendications précédentes, **caractérisé en ce que** le deuxième actionneur (2) est monté solidaire du plateau (10) par au moins un boîtier (21) sur lequel l'extrémité de butée (132) du deuxième segment (13) prend appui, directement ou indirectement (par l'intermédiaire d'un piston), pour transmettre le couple de freinage ou maintien au plateau (10) lors d'un actionnement dudit dispositif dans le deuxième mode de fonctionnement.

11. Dispositif selon l'une quelconque des revendications précédentes, **caractérisé en ce que** le deuxième actionneur comprend un ensemble d'actionnement linéaire (3) incluant au moins un premier piston (33) et un deuxième (32) piston qui sont déplacés en un mouvement linéaire l'un par rapport à l'autre pour venir appuyer respectivement sur les extrémités de butée (122, 132) du premier (12) et du deuxième segment (13).

12. Dispositif selon la revendication précédente, **caractérisé en ce que** l'extrémité de butée (132) du deuxième segment (13) et le boîtier (21) du deuxième actionneur (2) prennent appui l'un sur l'autre par l'intermédiaire du deuxième piston (32) (par exemple par un accident de forme, ici un épaulement 329), pour transmettre le couple de freinage ou maintien au plateau (10) lors d'un actionnement dudit dispositif dans le deuxième mode de fonctionnement.

13. Dispositif selon l'une quelconque des revendications 11 à 12, **caractérisé en ce que** le deuxième actionneur (2) écarte les extrémités de butée (122, 132) des deux segments par l'intermédiaire d'au moins un élément déformable élastiquement selon l'axe du mouvement d'actionnement, dit élément élastique (33), présentant une course déterminée pour emmagasiner, par compression dans l'ensemble d'actionnement (3) lors d'une activation dudit deuxième actionneur alors que le dispositif est dans la première position de freinage, une quantité d'énergie mécanique suffisante pour maintenir ou amener le dispositif dans la deuxième position de freinage si l'appui du premier actionneur (11) est interrompu après une désactivation dudit deuxième actionneur (2), sans nécessiter d'activer à nouveau ledit deuxième actionneur.

14. Dispositif selon l'une quelconque des revendications précédentes, **caractérisé en ce que** le deuxième actionneur (2) écarte les extrémités de butée (122, 132) des deux segments au moyen d'un mécanisme comprenant au moins une interface de transmission mécanique de mouvement d'un type présentant une irréversibilité du sens de transmission dudit mouvement.

15. Dispositif selon l'une quelconque des revendications 11 à 14, **caractérisé en ce que** l'ensemble d'actionnement linéaire (3) comprend au moins un premier élément fileté et un deuxième élément fileté interagissant entre eux pour former un système vis-écrou produisant le mouvement linéaire sous l'effet d'une rotation dudit premier élément par rapport audit deuxième élément, ladite rotation étant transmise depuis une motorisation par engrenages mécaniques à axes parallèles entre eux et à la direction dudit mouvement linéaire, ou formant au total un angle de moins de 30°, et notamment de moins de 15°.

16. Véhicule ou sous-ensemble de véhicule, notamment véhicule routier automobile, **caractérisé en ce qu'**il comprend un ou plusieurs dispositif de frein à tambour (1) selon l'une quelconque des revendications précédentes, dont le premier actionneur (11) est connecté et commandé pour réaliser une fonction de ralentissement et/ou arrêt dudit véhicule lorsqu'il est en mouvement, dite fonction de frein de service, et
dont le deuxième actionneur (2) est connecté et commandé pour réaliser une fonction de maintien à l'arrêt dudit véhicule, dite fonction de frein de stationnement, et/ou de ralentissement dudit véhicule en mouvement en cas de défaillance d'une fonction de type frein de service, dite fonction de frein de secours, et notamment d'une combinaison de frein de stationnement et de frein de secours.

17. Véhicule ou sous-ensemble selon la revendication précédente, **caractérisé en ce que** le deuxième actionneur (2) est activé par une motorisation électrique (5) commandée par un système de calculateur électronique centralisé gérant les fonctions électroniques dudit véhicule, ou une motorisation électrique commandée et alimentée par un système électronique de surveillance et de correction de freinage et/ou de trajectoire dudit véhicule.

18. Procédé d'assemblage d'un mécanisme de frein à tambour (1) comprenant un premier (12) et un deuxième (13) segment munis de garnitures (123, 133) dirigées vers l'extérieur, qui sont coiffés par ledit tambour et sont montés sur un plateau (10) de façon à pouvoir transmettre audit plateau un couple de freinage par absorption d'énergie sous l'effet d'un frottement avec une piste cylindrique portée par l'intérieur dudit tambour si lesdits segments sont écartés vers l'extérieur,
ledit procédé étant **caractérisé en ce qu'**il comprend au moins les opérations suivantes, dans cet ordre ou dans un autre ordre :
- fixation sur le plateau (10) d'au moins un premier actionneur (11) agencé pour pouvoir écarter vers l'extérieur les segments par appui sur leurs deux extrémités en vis-à-vis l'une de l'autre, dites extrémités mobiles (121, 131) ;
- montage des segments (12, 13) sur le plateau (10), dans une position où des extrémités de butée de ces segments, opposées aux extrémités mobiles, peuvent venir en butée contre un élément d'ancrage (21) solidaire dudit plateau lorsque lesdits segments sont écartés par ledit premier actionneur (11) ;
- installation d'un élément intercalaire (14) en position pour maintenir un écartement entre les deux extrémités mobiles (121, 131) des segments ; et
- fixation sur le plateau (10) d'un deuxième actionneur (2) agencé pour pouvoir écarter les deux extrémités de butée (122, 132) des segments de façon à mettre les segments en appui contre la piste cylindrique.

19. Procédé d'assemblage d'un véhicule ou sous-ensemble de véhicule **caractérisé en ce qu'**il comprend un assemblage et/ou un montage d'un dispositif de frein à tambour selon l'une quelconque des revendications 1 à 15.

## Patentansprüche

1. Vorrichtung einer Trommelbremse (1) für Straßenfahrzeug, insbesondere Kraftfahrzeug, welche etwa ein Bremsmoment zwischen einer Trommel und einer Bremsankerplatte (10) auslöst, die im Vergleich zu einander rotieren, wobei dies durch Aufnahme einer reibungsbedingten Energie erfolgt zwischen
einerseits einer Reibbahn in der Form eines umlaufenden Zylinders, welche auf einer Innenfläche der Trommel aufgenommen ist,
und andererseits Reibbelägen (123, 133), die auf einer ersten und einer zweiten, im Inneren des Zylinders gelagerten Bremsbacken (12, 13) aufgenommen sind und das Bremsmoment auf die Bremsankerplatte mindestens über ein sogenanntes Verankerungselement übertragen, das einen Anschlag für die Bremsbacken ausbildet,
wobei die Reibung dadurch erzeugbar ist, dass bei Betätigung mindestens eines ersten Stellglieds (1) mindestens eine der Bremsbacken nach außen gespreizt wird, wobei somit eine Bremsfunktion in einem ersten Betriebsmodus entsteht, welche die Vorrichtung in eine erste Bremsposition bringt,
**dadurch gekennzeichnet, dass** sie ein sogenanntes Zwischenelement (14) umfasst, das gegenüber der Bremsankerplatte (10) beweglich gelagert und derart angeordnet ist, um zwei gegenüberliegende Enden der Bremsbacken, die sogenannten beweglichen Enden (121, 131), auseinander gespreizt zu halten,
dass sie außerdem mindestens ein zweites, derart angeordnetes Stellglied (2) umfasst, um die auf der anderen Seite liegenden Enden der Bremsbacken, die sogenannten Anschlagenden (122, 132), auseinander spreizen und somit die Bremsbacken gegen die Reibbahn der Trommel drücken zu können,
wobei somit über Reibkraft ein Brems- bzw. Feststellmoment zwischen der Trommel und einer ersten Bremsbacke (12) übertragen werden kann, welche über ihr bewegliches Ende (121) gegen das Zwischenelement (14) gedrückt wird, welches wiederum gegen das bewegliche Ende (131) der zweiten Bremsbacke (13) gedrückt wird, welche das Brems- bzw. Feststellmoment über ihr Anschlagende (132) auf die Bremsankerplatte (10) überträgt, wobei somit eine Bremsfunktion in einem zweiten Betriebsmodus entsteht, welche die Vorrichtung in eine zweite Bremsposition bringt.

2. Vorrichtung einer Trommelbremse nach dem vorhergehenden Anspruch, **dadurch gekennzeichnet, dass** das erste Stellglied (11) beide Bremsbacken (12, 13) betätigt, indem es ihre beweglichen Enden (121, 131) auseinander spreizt.

3. Vorrichtung nach einem der vorhergehenden Ansprüche, **dadurch gekennzeichnet, dass** das Zwischenelement durch eine Nebenpleuelstange an jedem der beweglichen Enden (121, 131) der beiden Bremsbacken ausgebildet ist, welche derart angeordnet ist, um eine Nachstelleinrichtung zum Ausgleich des durch reibungsbedingten Verschleiß der Beläge (123, 133) gegen die Reibbahn der Trommel entstandenen Verschleißspiel auszubilden.

4. Vorrichtung nach einem der vorhergehenden Ansprüche, **dadurch gekennzeichnet, dass** das zweite Stellglied (2) fest verbunden mit der Bremsankerplatte (10) mittels mindestens eines Gehäuses (21) aufgenommen ist, gegen welches die Anschlagenden (122, 132) der beiden Bremsbacken (12, 13) direkt oder indirekt über Kolben des zweiten Stellglieds gedrückt werden, um bei einer Betätigung der Vorrichtung im ersten Betriebsmodus das Brems- bzw. Feststellmoment mindestens einer der Bremsbacken auf die Bremsankerplatte (10) zu übertragen.

5. Vorrichtung nach einem der vorhergehenden Ansprüche, **dadurch gekennzeichnet, dass** das erste Stellglied (11) etwa durch Bewegung eines oder mehrerer Kolben (111) unter einem hydraulischen Druck betrieben wird.

6. Vorrichtung nach einem der vorhergehenden Ansprüche 1 bis 4, **dadurch gekennzeichnet, dass** das erste Stellglied (11) etwa durch Bewegung eines oder mehrerer Kolben unter einem elektrischen Antrieb betrieben wird.

7. Vorrichtung nach einem der vorhergehenden Ansprüche, **dadurch gekennzeichnet, dass** das zweite Stellglied durch ein Motorisierungselement (5) angetrieben wird, das mindestens einen Elektromotor (52) umfasst.

8. Vorrichtung nach dem vorhergehenden Anspruch, **dadurch gekennzeichnet, dass** das Motorisierungselement (5) des zweiten Stellglieds (2) eine elektronische Unteranordnung umfasst, welche derart angeordnet ist, um ein elektronisches, über eine elektronische Steuerverbindung empfangene Steuersignal zu empfangen und um das Steuersignal zur Versorgung des Elektromotors (52) mit einer elektrischen Energie zu interpretieren, welche über eine andere elektrische Verbindung als die Steuerverbindung empfangen wurde.

9. Vorrichtung nach einem der vorhergehenden Ansprüche 1 bis 8, **dadurch gekennzeichnet, dass** das zweite Stellglied etwa durch Empfang einer Steuerung durch ein mechanisches Element betrieben wird.

10. Vorrichtung nach einem der vorhergehenden Ansprüche, **dadurch gekennzeichnet, dass** das zweite Stellglied (2) fest verbunden mit der Bremsankerplatte (10) mittels mindestens eines Gehäuses (21) aufgenommen ist, gegen welches das Anschlagende (132) der zweiten Bremsbacke (13) direkt oder indirekt (über einen Kolben) gedrückt wird, um das Brems- bzw. Feststellmoment bei einer Betätigung der Vorrichtung im zweiten Betriebsmodus auf die Bremsankerplatte (10) zu übertragen.

11. Vorrichtung nach einem der vorhergehenden Ansprüche, **dadurch gekennzeichnet, dass** das zweite Stellglied eine lineare Betätigungsanordnung (3) mit mindestens einem ersten Kolben (33) und einem zweiten (32) Kolben umfasst, welche im Vergleich zu einander linear bewegt werden, um jeweils gegen die Anschlagenden (122, 132) der ersten (12) und der zweiten (13) Bremsbacke gedrückt zu werden.

12. Vorrichtung nach dem vorhergehenden Anspruch, **dadurch gekennzeichnet, dass** das Anschlagende (132) der zweiten Bremsbacke (13) und das Gehäuse (21) des zweiten Stellglieds (2) über den zweiten Kolben (32) (zum Beispiel durch eine fehlerhafte Form, hier eine Schulter 329) gegen einander gedrückt werden, um das Brems- bzw. Feststellmoment bei einer Betätigung der Vorrichtung im zweiten Betriebsmodus auf die Bremsankerplatte (10) zu übertragen.

13. Vorrichtung nach einem der Ansprüche 11 bis 12, **dadurch gekennzeichnet, dass** das zweite Stellglied (2) die Anschlagenden (122, 132) der beiden Bremsbacken mittels mindestens eines in der Bewegungsachse der Betätigung elastisch verformbaren Elements, des sogenannten elastischen Elements (33), spreizt, welches einen vorbestimmten Lauf aufweist, um durch Druck in der Betätigungsanordnung (3) bei einer Aktivierung des zweiten Stellglieds, während die Vorrichtung sich in der ersten Bremsposition befindet, eine ausreichende Menge an mechanischer Energie zu speichern, um die Vorrichtung in der zweiten Bremsposition festzuhalten oder sie in diese zu bringen, wenn das Drücken des ersten Stellglieds (11) nach einer Deaktivierung des zweiten Stellglieds (2) unterbrochen wird, ohne dass das zweite Stellglied erneut aktiviert werden muss.

14. Vorrichtung nach einem der vorhergehenden Ansprüche, **dadurch gekennzeichnet, dass** das zweite Stellglied (2) die Anschlagenden (122, 132) der beiden Bremsbacken mittels eines Mechanismus spreizt, der mindestens eine Schnittstelle zur mechanischen Übertragung einer Bewegung mit etwa einer Unumkehrbarkeit der Übertragungsrichtung der Bewegung umfasst.

15. Vorrichtung nach einem der Ansprüche 11 bis 14, **dadurch gekennzeichnet, dass** die lineare Betätigungsanordnung (3) mindestens ein erstes Gewindeelement und ein zweites Gewindeelement umfasst, die zur Ausbildung eines Schrauben-Muttern-Systems zusammenwirken, welches die lineare Bewegung dadurch erzeugt, dass das erste Element im Vergleich zum zweiten Element rotiert, wobei die Rotation ausgehend von einer Motorisierung mittels mechanischen Verzahnungen mit untereinander parallel verlaufenden Achsen und in der Richtung der linearen Bewegung übertragen wird oder insgesamt einen Winkel kleiner 30° und insbesondere kleiner 15° bildet.

16. Fahrzeug oder Fahrzeug-Unteranordnung, insbesondere Kraftfahrzeug, **dadurch gekennzeichnet, dass** es eine oder mehrere Trommelbremsvorrichtungen (1) nach einem der vorhergehenden Ansprüche umfasst, deren erstes Stellglied (11) verbunden und gesteuert wird, um eine Verzögerungs- und/oder Stoppfunktion des sich bewegenden Fahrzeugs, eine sogenannte Fahrbremsfunktion, zu erzeugen, und deren zweites Stellglied (2) verbunden und gesteuert ist, um eine Haltefunktion des Fahrzeugs im Stillstand, die sogenannte Parkbremsfunktion, und/oder eine Verzögerungsfunktion des sich bewegenden Fahrzeugs beim Versagen etwa einer Fahrbremsfunktion, die sogenannte Notbremsfunktion, und insbesondere eine Kombination aus Parkbremse und Notbremse zu erzeugen.

17. Fahrzeug oder Unteranordnung nach dem vorhergehenden Anspruch, **dadurch gekennzeichnet, dass** das zweite Stellglied (2) durch eine elektrische Motorisierung (5) aktiviert wird, welche durch ein zentralisiertes System zur elektronischen Berechnung gesteuert wird, welches die elektronischen Funktionen des Fahrzeugs ansteuert, oder durch eine elektrische Motorisierung, die durch ein elektronisches Überwachungs- und Korrektursystem der Bremsung und/oder der Fahrspur des Fahrzeugs gesteuert und versorgt wird.

18. Verfahren zum Zusammenbau einer Einrichtung einer Trommelbremse (1), eine erste (12) und eine zweite Bremsbacke (13) mit nach außen gerichteten Bremsbelägen (123, 133) umfassend, wobei die Trommel darüber gelagert ist und die Bremsbeläge auf einer Bremsankerplatte (10) derart aufgenommen sind, dass ein Bremsmoment durch Energieaufnahme bei einer Reibung mit einer zylinderförmigen, auf dem Inneren der Trommel aufgenommenen Bahn auf die Bremsankerplatte übertragen werden kann, wenn die Bremsbacken nach außen gespreizt werden,
wobei das Verfahren **dadurch gekennzeichnet ist, dass** es mindestens die folgenden Vorgänge in dieser oder in einer anderen Reihenfolge umfasst:
- Befestigung auf der Bremsankerplatte (10) mindestens eines ersten Stellglieds (11), derart angeordnet, um die Bremsbacken durch Drücken auf ihre beiden, gegenüberliegenden Enden, die sogenannten beweglichen Enden (121, 131), nach außen spreizen zu können;
- Aufnahme der Bremsbacken (12, 13) auf der Bremsankerplatte (10) in einer Position, in der den beweglichen Enden gegenüberliegende Anschlagenden dieser Bremsbacken gegen ein Verankerungselement (21) in Anschlag kommen, das mit der Bremsankerplatte fest verbunden ist, wenn die Bremsbacken durch das erste Stellglied (11) gespreizt werden;
- Anbringen eines Zwischenelements (14) in Position, um die beiden beweglichen Enden (121, 131) der Bremsbacken auseinander gespreizt zu halten; und
- Befestigung auf der Bremsankerplatte (10) eines zweiten Stellglieds (2), derart angeordnet, um beide Anschlagenden (122, 132) der Bremsbacken spreizen zu können, sodass die Bremsbacken gegen die zylinderförmige Bahn gedrückt werden.

19. Verfahren zum Zusammenbau eines Fahrzeugs oder Fahrzeug-unteranordnung, **dadurch gekennzeichnet, dass** es einen Zusammenbau und/oder eine Montage einer Vorrichtung einer Trommelbremse nach einem der Ansprüche 1 bis 15 umfasst.

## Claims

1. Drum brake device (1) for a road vehicle, in particular a motor car, of the type generating a braking torque between a drum and a backing plate (10) in rotational movement with respect to each other, by absorption of energy under the effect of friction between:
on the one hand, a braking surface forming a cylinder of revolution and which is borne by an inner surface of said drum,
and on the other hand, brake linings (123, 133) borne by a first and a second shoe (12, 13) arranged inside said cylinder and transmitting the braking torque to said backing plate at least by an element called an anchor forming an abutment for the shoes.
said friction being able to be obtained by moving apart at least one of said shoes outwards, under the effect of at least one first actuator (11), thus ensuring a braking function in a first mode of operation which brings the device into a first braking position,
said device being **characterized in that** it comprises an element called a spacer element (14), which is mobile with respect to the backing plate (10) and is arranged in order to hold apart from each other two ends of said shoes that are opposite each other, called mobile ends (121, 131),
**in that** it also comprises at least one second actuator (2), arranged in order to be able to move apart from each other the ends of said shoes situated on the opposite side, called stop ends (122, 132), and thus press said shoes against the braking surface of the drum,
thus making it possible using friction to transmit a braking or holding torque when stationary, between said drum and a first shoe (12), which presses via its mobile end (121) on said spacer element (14), which presses on the mobile end (131) of the second shoe (13), which via its stop end (132) transmits said braking or holding torque to the backing plate (10), thus providing a braking function in a second mode of operation which brings the device into a second braking position.

2. Drum brake device according to the preceding claim, **characterized in that** the first actuator (11) actuates the two shoes (12, 13), by moving their mobile ends (121, 131) apart from each other.

3. Device according to any one of the preceding claims, **characterized in that** the spacer element is produced by a rod articulated on each of the mobile ends (121, 131) of the two shoes, and which is arranged in order to produce a mechanism for adjusting the play resulting from wear by friction of the linings (123, 133) against the braking surface of the drum.

4. Device according to any one of the preceding claims, **characterized in that** the second actuator (2) is mounted firmly fixed to the backing plate (10) via at least one housing (21) on which the stop ends (122, 132) of the two shoes (12, 13) press, directly or indirectly, via pistons of the second actuator, in order to transmit to the backing plate (10) the braking or holding torque of at least one of the shoes, during an actuation of said device in the first mode of operation.

5. Device according to any one of the preceding claims, **characterized in that** the first actuator (11) is of a type operating by displacement of one or more pistons (111) under the effect of hydraulic pressure.

6. Device according to any one of claims 1 to 4, **characterized in that** the first actuator (11) is of a type operating by displacement of one or more pistons under the effect of an electrical drive.

7. Device according to any one of the preceding claims, **characterized in that** the second actuator is driven by a drive element (5) comprising at least one electric motor (52).

8. Device according to the preceding claim, **characterized in that** the drive element (5) of the second actuator (2) comprises an electronic sub-assembly arranged in order to receive an electronic control signal received by an electronic control connection and interpret said control signal in order to supply power to the electric motor (52) using electrical power received through an electrical connection different from the control connection.

9. Device according to any one of claims 1 to 8, **characterized in that** the second actuator is of a kind operating by receiving a command through a mechanical component.

10. Device according to any one of the preceding claims, **characterized in that** the second actuator (2) is mounted firmly fixed to the backing plate (10) via at least one housing (21) on which the stop end (132) of the second shoe (13) presses, directly or indirectly, (via a piston), in order to transmit the braking or holding torque to the backing plate (10) during an actuation of said device in the second mode of operation.

11. Device according to any one of the preceding claims, **characterized in that** the second actuator comprises a linear actuator assembly (3) including at least one first piston (33) and a second piston (32) which are displaced in a linear movement with respect to each other in order to press respectively on the stop ends (122, 132) of the first (12) and second (13) shoes.

12. Device according to the preceding claim, **characterized in that** the stop end (132) of the second shoe (13) and the housing (21) of the second actuator (2) press on each other via the second piston (32) (for example by an appropriate shape, here a shoulder 329), in order to transmit the braking or holding torque to the backing plate (10) during an actuation of said device in the second mode of operation.

13. Device according to any one of claims 11 to 12, **characterized in that** the second actuator (2) moves apart the stop ends (122, 132) of the two shoes via at least one elastically deformable element along the axis of the actuation movement, called elastic element (33), having a travel determined in order to store, by compression in the actuator assembly (3) during an actuation of said second actuator while the device is in the first braking position, an amount of mechanical energy sufficient to hold the device in, or bring it into, the second braking position if the pressure of the first actuator (11) is interrupted after deactivation of said second actuator (2), without the need to re-actuate said second actuator.

14. Device according to any one of the preceding claims, **characterized in that** the second actuator (2) moves apart the stop ends (122, 132) of the two shoes by means of a mechanism comprising at least one interface for the mechanical transmission of movement of a type having non-reversibility of the direction of transmission of said movement.

15. Device according to any one of claims 11 to 14, **characterized in that** the linear actuator assembly (3) comprises at least one first threaded element and one second threaded element engaging together in order to form a screw-and-nut system producing the linear movement under the effect of a rotation of said first element with respect to said second element, said rotation being transmitted from a drive by mechanical gearings with axes parallel to each other and in the direction of said linear movement, or forming in total an angle of less than 30°, and in particular of less than 15°.

16. Vehicle or vehicle sub-assembly, in particular a road motor vehicle, **characterized in that** it comprises one or more drum brake devices (1) according to any one of the preceding claims,
the first actuator (11) of which is connected and controlled in order to carry out a function of slowing and/or stopping said vehicle when it is moving, called service brake function, and
the second actuator (2) of which is connected and controlled in order to carry out a function of holding said vehicle when stationary, called parking brake function, and/or slowing said moving vehicle in the event of failure of a function of the service brake type, and in particular a combination of parking brake and emergency brake.

17. Vehicle or sub-assembly according to the preceding claim, **characterized in that** the second actuator (2) is actuated by a electrical drive (5) controlled by a centralized electronic computer managing the electronic functions of said vehicle, or an electrical drive controlled and supplied with power by an electronic system for monitoring and correction of braking and or/trajectory of said vehicle.

18. Method for the assembly of a drum brake mechanism (1) comprising a first (12) and a second (13) shoe equipped with linings (123, 133) directed outwards, which are covered by said drum and are mounted on a backing plate (10) so as to be able to transmit a braking torque to said backing plate by absorption of energy under the effect of friction with a cylindrical braking surface borne by the inside of said drum if said shoes are moved apart outwards.
said method being **characterized in that** it comprises at least the following operations, in this order or in another order:
- fastening onto the backing plate (10) at least one first actuator (11) arranged in order to be able to move the shoes apart outwards by pressing on their two ends opposite each other, called mobile ends (121, 131);
- mounting the shoes (12, 13) on the backing plate (10), in a position in which stop ends of these shoes, opposite the mobile ends, can press against an anchor (21) of said backing plate when said shoes are moved apart by said first actuator (11);.
- installing a spacer element (14) in position in order to keep a separation between the two mobile ends (121, 131) of the shoes; and
- fixing on the backing plate (10) a second actuator (2) arranged in order to move the two stop ends (122, 132) of the shoes apart so as to press them against the braking surface.

19. Method for assembling a vehicle or vehicle sub-assembly, **characterized in that** it comprises assembling and/or mounting a drum brake device according to any one of claims 1 to 15.
